(19) Europäisches Patentamt / European Patent Office / Office européen des brevets

(11) **EP 3 205 751 B1**

(12) **EUROPEAN PATENT SPECIFICATION**

(45) Date of publication and mention of the grant of the patent:
**28.08.2024 Bulletin 2024/35**

(21) Application number: **15848620.9**

(22) Date of filing: **01.10.2015**

(51) International Patent Classification (IPC):
*C09J 7/22* (2018.01)     *C09J 7/38* (2018.01)
*C09J 107/00* (2006.01)     *C25D 11/00* (2006.01)
*C25D 11/02* (2006.01)

(52) Cooperative Patent Classification (CPC):
**C09J 7/22; C09J 7/383; C09J 107/00; C25D 11/00; C25D 11/02; C25D 11/022;** C09J 2203/31

(86) International application number:
**PCT/JP2015/077992**

(87) International publication number:
**WO 2016/056467 (14.04.2016 Gazette 2016/15)**

(54) **MASKING SHEET FOR ANODIZING**

ABDECKFOLIE ZUR ANODISIERUNG

FEUILLE DE MASQUAGE POUR ANODISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.10.2014 JP 2014205587**

(43) Date of publication of application:
**16.08.2017 Bulletin 2017/33**

(73) Proprietor: **Nitto Denko Corporation**
**Ibaraki-shi, Osaka 567-8680 (JP)**

(72) Inventors:
- **MORITA, Kosuke**
  **Ibaraki-shi**
  **Osaka 567-8680 (JP)**
- **YAMAMOTO, Shuuhei**
  **Ibaraki-shi**
  **Osaka 567-8680 (JP)**
- **HIDA, Takafumi**
  **Ibaraki-shi**
  **Osaka 567-8680 (JP)**
- **MUTA, Shigeki**
  **Ibaraki-shi**
  **Osaka 567-8680 (JP)**
- **MATSUSHITA, Kiichiro**
  **Ibaraki-shi**
  **Osaka 567-8680 (JP)**

(74) Representative: **Grünecker Patent- und Rechtsanwälte**
**PartG mbB**
**Leopoldstraße 4**
**80802 München (DE)**

(56) References cited:
EP-A1- 2 722 376       WO-A1-2006/057149
JP-A- 2007 231 340     JP-A- 2010 018 831
JP-A- H0 234 680       JP-A- H0 234 680
JP-A- H09 134 991      JP-A- S60 238 497
US-A1- 2008 029 399    US-A1- 2010 252 192

**Description**

[Technical Field]

The present invention relates to a masking sheet for use in an anodizing process.

[Background Art]

For treating an article (or "processing object" hereinafter) with a chemical solution, masking techniques are known, where non-target areas for a treatment of the processing object are protected from the chemical solution with a pressure-sensitive adhesive (PSA) sheet applied to the non-target areas. A PSA sheet used for masking purposes during such a treatment with a chemical solution (chemical solution treatment or CS treatment hereinafter) typically comprises a film of a PSA (a PSA layer) and a substrate supporting the PSA. Patent Document 1 discloses a PSA tape that comprises a metal foil substrate and can be preferably used for masking purposes. JPH0234680A, US2010/252192A1, EP2722376A1 and US2008/029399A1 also disclose masking sheets.

[Citation List]

[Patent Literature]

[Patent Document 1] Japanese Patent Application Publication No. 2014-139299

[Summary of Invention]

[Technical Problem]

Among CS treatments, in an anodizing process (anodic oxidation), the processing object is a conductive metal member. Thus, conventionally, a PSA sheet comprising a metal substrate (typically a PSA sheet comprising metal foil such as aluminum foil as the substrate) is used for masking. In view of increase the ease of processing, etc., as a new form of a PSA sheet used for masking purposes during anodizing (or a masking sheet for anodizing or simply a masking sheet, hereinafter), the present inventors have researched to provide a masking sheet comprising a non-metal substrate. However, it has been revealed that when the metal substrate in a conventional masking sheet for anodizing is simply changed to a non-metal substrate, the ability to prevent chemical solution penetration during anodizing tends to decrease. It has been also found that when a metal member on which a non-metal substrate-supported masking sheet is adhered is suspended in an anodizing solution and subjected to an electric current (subjected to an anodizing process), in some cases, the solution is more likely to penetrate as compared to when suspended in a solution of the same compositions, but not subjected to an electric current.

This invention has been made in view of such circumstances with an objective to provide a masking sheet that is able to suitably prevent chemical solution penetration (or simply solution penetration hereinafter) in an embodiment that uses a non-metal substrate.

[Solution to Problem]

The present invention provides a masking sheet for anodizing in accordance with claim 1. Preferred embodiments are defined in claims 2 to 5.

The masking sheet for anodizing provided by this description comprises a substrate having first and second faces and a PSA layer placed on the first face side of the substrate. Here, the substrate is a non-metal substrate. The masking sheet has an elastic modulus Et' and the substrate has a thickness Hs, satisfying the next relation $0.7 \text{ N mm} < \text{Et' Hs}^3$. According to a masking sheet that satisfies the relation, in an embodiment using a non-metal substrate, solution penetration during anodizing can be effectively prevented.

The masking sheet has an elastic modulus Et' of 1.0 GPa or greater. The masking sheet having such an elastic modulus Et' can be highly proof against solution penetration even in a thinner embodiment.

The masking sheet disclosed herein has a thickness of 0.30 mm or less. For instance, such a relatively thin masking sheet highly proof against solution penetration during anodizing can be preferably used in an embodiment where it is used as the masking sheet in a process of coating (painting) the processing object continuously after an anodizing process.

The masking sheet disclosed herein preferably exhibits a 90° peel strength of 1.0 N/20mm to 25 N/20mm relative to duralumin A2024. This can combine high levels of reliability of masking during anodizing and efficiency of peeling during removal of the masking sheet from the processing object when it is no longer needed.

In the masking sheet according to another preferable embodiment, the PSA forming the PSA layer comprises a tackifier. The tackifier in the PSA tends to enhance the adhesive strength (e.g. 90° peel strength) to the processing object and increase the reliability of masking. The tackifier content can be, for instance, 10 % to 85 % by weight of the PSA layer.

In the masking sheet, the PSA forming the PSAlayer is a rubber-based PSA. The masking sheet comprising a rubber-based PSAlayer tends to be less likely to leave the PSA on the surface of the processing object during removal of the masking sheet from the processing object after anodized. In other words, it is preferable because it tends to exhibit excellent residue-free removability (clean release) from the processing object.

A favorable example of the rubber-based PSA includes a rubber-based PSA wherein a natural rubber accounts for 95 % by weight or more of the rubber-based polymer in the PSA. As the natural rubber, it is preferable to use, for instance, a natural rubber having a Mooney viscosity $MS_{1+4}$(100 °C) greater than 70. The rubber-based PSA whose base polymer is a natural rubber with such a relatively high molecular weight tends to exhibit adequate chemical resistance.

The rubber-based PSA may comprise about 20 parts to 40 parts by weight of a terpene-based resin relative to 100 parts by weight of the rubber-based polymer. The PSA layer having such a composition tends to show highly tight adhesion to adherend.

The PSA layer in the masking sheet disclosed herein may be formed of a PSA crosslinked by a reaction of a hydroxy group-containing polymer and a hydroxy-reactive crosslinking agent (i.e. a PSA comprising cross-links formed with the hydroxy group-containing polymer and the hydroxy-reactive crosslinking agent). The masking sheet comprising such a PSA layer is preferable because blocking between edge faces of the PSA layer tends to be inhibited. By this, for instance, when the masking sheet is divided in several adjacently-placed pieces and one PSA piece (the first PSApiece) is separated from another PSApiece adjacent to it, the peripheries of the PSAlayer of the first PSApiece become less susceptible to degradation of shape accuracy. This may advantageously contribute to increase the consistency (reliability) of the ability to prevent solution penetration via the peripheries of the first PSApiece in an anodizing process given to an object to which the PSApiece is adhered.

The masking sheet disclosed herein can be formed to allow visual detection of solution penetration into the masking sheet when inspected from the outer face side of the masking sheet. With respect to the masking sheet in such an embodiment, the state of solution penetration in the masking sheet can be easily assessed without peeling the masking sheet adhered on the processing object. Thus, for instance, it can be preferably used in an embodiment where it is continuously used as the masking sheet for coating following an anodizing process.

[Brief Description of Drawings]

Fig. 1 shows a cross-sectional diagram schematically illustrating the constitution of the masking sheet according to an embodiment.
Fig. 2 shows a cross-sectional diagram schematically illustrating the constitution of the masking sheet according to another embodiment.
Fig. 3 shows a perspective diagram schematically illustrating a PSA product according to an embodiment.
Fig. 4 shows a cross-sectional diagram along line IV-IV in Fig. 3.

[Description of Embodiments]

Preferred embodiments of the present invention are described below. Matters necessary to practice this invention other than those specifically referred to in this description can be understood by a person skilled in the art based on the disclosure about implementing the invention in this description and common general knowledge at the time of application. The present invention can be practiced based on the contents disclosed in this description and common technical knowledge in the subject field.

In the drawings referenced below, a common reference numeral may be assigned to members or sites producing the same effects, and duplicated descriptions are sometimes omitted or simplified.

The masking sheet disclosed herein comprises a substrate having first and second faces, and a PSA layer provided on the first face side of the substrate. Here, the substrate is a non-metal substrate.

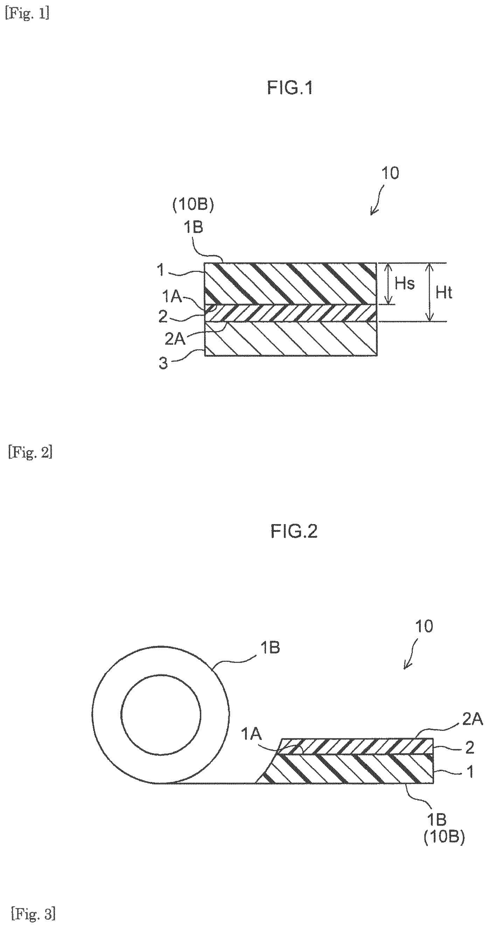

Fig. 1 schematically illustrates a typical constitution of the masking sheet according to an embodiment. The masking sheet 10 comprises a sheet-shaped substrate (e.g. a resin sheet) 1 having the first face 1A and the second face 1B, and a PSAlayer 2 provided on the first face 1A side. When used, masking sheet 10 is applied to non-target areas (areas to be masked) in anodizing of the processing object. By carrying out an anodizing process while the masking sheet 10 is adhered on the non-target areas, the non-target areas are protected from the anodizing solution.

Before used (i.e. before applied to the processing object), masking sheet 10 may be in a form where, typically as shown in Fig. 1, the surface (adhesive face) 2Aof the PSA layer 2 is protected with a release liner 3 having a release face at least on the side facing the PSA layer 2. Alternatively, as shown in Fig. 2, it may be in a form where the second face 1B (opposite from the first face 1A and also corresponding to the outer face 10B of the masking sheet 10) of substrate 1 is a release face and the masking sheet 10 is wound in a roll with the second face 1B in contact with the PSAlayer 2 to protect the surface (adhesive face) 2A.

The masking sheet in the art disclosed herein is characterized by satisfying $0.7$ N-mm $< Et' \cdot Hs^3$. The $Et' \cdot Hs^3$ value is proportional to the flexural rigidity of the masking sheet. The present inventors have discovered that when the masking sheet is formed so that its flexural rigidity is at or above a certain level, in particular, $Et' \cdot Hs^3$ is greater than 0.7 N mm, solution penetration into the masking sheet is significantly inhibited during anodizing.

To implement the art disclosed herein, it is unnecessary to reveal how the aforementioned effects are obtained with the masking sheet satisfying the relation; however, for instance, the following can be thought. In particular, as a cause as to why solution penetration proceeds during anodizing when the metal substrate is changed to a non-metal substrate, the following can be thought: generally, when compared to a masking sheet using a metal substrate, in a masking sheet using a non-metal substrate (typically an insulator), during anodizing (when subjected to electric current), the electric field is greatly distorted because of the adhered masking sheet. The distortion of the electric field may induce concentration of the current; and therefore, in the vicinity of the peripheries of the masking sheet using the non-metal substrate, formation of gas (gas formed mainly by electrolytic decomposition, i.e. electrolyzed gas) tends to be accelerated. The electrolyzed gas formed near the peripheries of the masking sheet may lift the masking sheet from the surface of the processing object to decrease the tightness of adhesion of the masking sheet, possibly causing solution penetration to proceed from the peripheries of the masking sheet. When the masking sheet is made more flexurally rigid and less susceptible to deformation, even during anodizing, the masking sheet resists the force of the electrolysis gas lifting the masking sheet (i.e. to suppress the electrolysis gas), making it easier to maintain its tight adhesion to the surface of the processing object. Because of this, solution penetration can be better prevented during anodizing.

The masking sheet disclosed herein may have an $Et' \cdot Hs^3$ value of typically greater than 0.8 N-mm, preferably greater than 1.0 N-mm, more preferably greater than 1.5 N mm, or yet more preferably greater than 2.0 N mm (e.g. greater than 2.2 N mm). With increasing $Et' \cdot Hs^3$ value, solution penetration into the masking sheet tends to be inhibited to a greater extent in an anodizing process given to an object on which the masking sheet is adhered to areas to be masked. The maximum $Et' \cdot Hs^3$ value is not particularly limited. In view of avoiding an excessively large thickness Ht of the masking sheet and from the standpoint of the availability of the substrate or the ease of its manufacturing, $Et' \cdot Hs^3$ is usually suitably about $10 \times 10^3$ N mm or less, or preferably about $1 \times 10^3$ N mm or less (e.g. about $0.5 \times 10^3$ N mm or less).

The elastic modulus Et' of the masking sheet can be determined, using a commercial dynamic viscoelastometer. In particular, a sample (masking sheet) for analysis is cut to a 30 mm long by 5 mm wide strip to prepare a test piece. With respect to the test piece, using a dynamic viscoelastometer (RSA-III available from TA Instruments) in a tension mode, at a chuck distance of 23 mm, a heating rate of 10 °C/min, a frequency of 1 Hz and a strain of 0.05 %, the tensile storage elastic modulus is determined as the value per unit cross-sectional area of substrate in a temperature range of 0 °C to 100 °C. From the results, the tensile storage elastic modulus per unit cross-sectional area of substrate at 25 °C can be determined. This value can be used as the elastic modulus Et' of the masking sheet.

Here, the elastic modulus Et' of the masking sheet is determined as the value per unit cross-sectional area of substrate. This is because, usually, the PSA's elastic modulus is negligibly small as compared to the substrate's elastic modulus (typically less than 1 % of the substrate's elastic modulus). Thus, when the cross-sectional area of the PSAlayer is included in the cross-sectional area used for determination of the tensile storage elastic modulus, it makes it rather difficult to appropriately access the properties of the masking sheet to meet the objective of this application. In addition, the PSA's elastic modulus is exceedingly small as compared to the substrate's elastic modulus; and therefore, from the standpoint of solving the technical problem of this invention, the elastic modulus determined with respect to the masking sheet sample by the method described above (i.e. tensile storage elastic modulus per unit cross-sectional area of substrate, Et') can be considered mostly the same as the substrate's elastic modulus Es' (measured in the same manner as for Et' except that a 30 mm long by 5 mm wide strip cut from the substrate is used as the sample). Accordingly, in the art disclosed herein, the substrate's elastic modulus Es' can be used as a substitute for the elastic modulus Et' of the masking sheet or as an approximation thereof that is satisfactory at least for practical use. As used herein, Et' and Es' are interchangeable unless otherwise noted. For instance, $Et' \cdot Hs^3$ can be read as $Es' \cdot Hs^3$ and vice versa.

The elastic modulus Et' of the masking sheet is 1.0 GPa or greater (i.e. $1.0 \times 10^3$ N/mm$^2$ or greater), preferably 1.5 GPa or greater, or more preferably 2.0 GPa or greater. The maximum Et' value is not particularly limited. From the standpoint of the availability of the substrate or the ease of its manufacturing, it is usually suitably 30 GPa or less, preferably 20 GPa or less, or more preferably 10 GPa or less (e.g. 6.0 GPa or less). Et' can be adjusted by the composition of the substrate and the materials used therein as well as by the combination of these, etc.

The thickness Ht of the masking sheet is not particularly limited. The art disclosed herein can be implemented, for instance, in an embodiment where Ht is 7 mm or less (typically 5 mm or less, e.g. 1 mm or less). In a preferable embodiment, Ht can be 0.50 mm or less; it is preferably 0.30 mm or less, more preferably 0.25 mm or less (e.g. 0.20 mm or less), or yet more preferably 0.15 mm or less (typically less than 0.15 mm). When a liquid such as a solvent-based paint is supplied (e.g. sprayed) to an object on which the masking sheet is adhered, a smaller thickness Ht of the masking sheet makes it easier to reduce the amount of the liquid that accumulates on the edge faces of the masking sheet. This is particularly meaningful when the masking sheet disclosed herein is used for masking in a coating process (typically a coating process using a solvent-based paint), etc. This can bring about effects such as increased precision of coating and greater residue-free removability when removing the masking sheet after the coating process. The minimum Ht is not particularly limited. It is usually suitably 0.04 mm or greater, or preferably 0.06 mm or greater. The masking sheet disclosed herein can be preferably made in an embodiment where Ht is greater than 0.08 mm (typically 0.09 mm or greater, e.g. 0.10 mm or greater).

The thickness Ht of the masking sheet refers to the thickness of the portion that is applied to the adherend (processing object). For instance, in the masking sheet 10 configured as shown in Fig. 1, it refers to the thickness from the adhesive face 2A (the surface applied to the processing object) through the outer face 10B (which is typically also the second face 1B of the substrate 1) of the masking sheet 10, but it does not include the thickness of the release liner 3.


<Substrate>

In the art disclosed herein, the non-metal substrate constituting the masking sheet refers to a substrate whose primary component is a non-metallic material, typically, a substrate in which the non-metallic material accounts for about 50 % or more by weight or by volume. Here, the non-metal refers to a non-metallic material in general and its concept encompasses an organic material and an inorganic non-metallic material. The non-metal substrate may have a monolayer structure consisting of one layer or a multilayer structure formed entirely or partially of two or more layers. The respective layers forming the multilayer structure may be different from one another in composition or construction, or may be the same in composition and construction. The non-metal substrate may comprise a layer formed of a species selected among organic materials and inorganic non-metallic materials, and a layer formed of a blend or a composite (composite material) of two or more different materials. As long as the primary component is a non-metallic material, the non-metal substrate may comprise a layer formed of a metallic material or a layer formed of a blend or a composite of a metallic material and an organic material or an inorganic non-metallic material.

Non-limiting examples of the organic material include a synthetic organic material, a natural organic material, a semi-synthetic organic material and a recycled organic material. The organic materials may be used solely as one species or as a mixture of two or more species, for instance, in a film form, in a matrix form dispersing other material, in a form impregnated in other material, in a fiber form, in a powder form, etc. Non-limiting examples of the inorganic non-metallic material include various kinds of glass and ceramic. From the standpoint of the flexibility of the masking sheet, etc., the inorganic non-metallic material can be used as a blend or a composite that further comprises an organic material, typically in a fiber form or in a powder form. Alternatively, a thin layer of the inorganic non-metallic material may be formed entirely or partially on the surface of another layer by means of, for instance, vapor deposition, etc. The metallic material can be preferably used as a blend or a composite that further comprises an organic material, typically in a fiber form or in a powder form. Alternatively, a thin layer of the metallic material may be formed entirely or partially on the surface of another layer by means, for instance, vapor deposition and plating.

As the substrate of the masking sheet disclosed herein, various kinds of substrate in a film form (substrate film) can be preferably used. It is preferable to use a substrate film comprises a resin film capable of maintaining its shape by itself (i.e. a self-supported or independent film) as the base film. Here, the "resin film" refers to a resin film that has a non-porous structure and is typically essentially free of bubbles (essentially void-free). Thus, the concept of resin film should be distinguished from foamed films and non-woven fabrics. The resin film may have a monolayer structure or a multilayer structure (e.g. a three-layer structure) formed of two or more layers.

As the resin material forming the resin film, it is possible to use polyester resin, polyolefinic resins, polyamide resin (PA), polyimide resin (PI), polyamide-imide resin (PAI), polyether ether ketone resin (PEEK), polyethersulfone (PES), polyphenylene sulfide resin (PPS), polycarbonate resin (PC), polyurethane resin (PU), ethylene-vinyl acetate resin (EVA), fluororesins such as polytetrafluoroethylene (PTFE), acrylic resin, and the like. The resin film may be formed, using a resinous material that comprises solely one species among these resins or a resinous material in which two or more species are blended. The resin film can be a non-stretched kind or a stretched kind (e.g. uniaxially stretched or biaxially stretched).

As for resinous materials preferable from the standpoint of the chemical resistance during anodizing, etc., examples include a polyester-based resin, PPS resin and a polyolefinic resin. Here, the polyester-based resin refers to a resin comprising more than 50 % polyester by weight. Similarly, the PPS resin refers to a resin comprising more than 50 % PPS by weight. The polyolefinic resin refers to a resin comprising more than 50 % polyolefin by weight.

As the polyester-based resin, typically a polyester-based resin comprising, as the primary component, a polyester obtainable by polycondensation of a dicarboxylic acid and a diol is used.

Examples of the dicarboxylic acid forming the polyester include aromatic dicarboxylic acids such as phthalic acid, isophthalic acid, terephthalic acid, 2-methylterephthalic acid, 5-sulfoisophthalic acid, 4,4'-diphenyldicarboxylic acid, 4,4'-diphenyl ether dicarboxylic acid, 4,4'-diphenyl ketone dicarboxylic acid, 4,4'-diphenoxyethane dicarboxylic acid, 4,4'-diphenylsulfone dicarboxylic acid, 1,4-naphthalene dicarboxylic acid, 1,5-naphthalene dicarboxylic acid, 2,6-naphthalene dicarboxylic acid and 2,7-naphthalene dicarboxylic acid; alicyclic dicarboxylic acids such as 1,2-cyclohexane dicarboxylic acid, 1,3-cyclohexane dicarboxylic acid, and 1,4-cyclohexane dicarboxylic acid; aliphatic dicarboxylic acids such as malonic acid, succinic acid, glutaric acid, adipic acid, pimelic acid, suberic acid, azelaic acid, sebacic acid, and dodecanoic acid; unsaturated dicarboxylic acids such as maleic acid, anhydrous maleic acid, and fumaric acid; and derivatives of these (e.g. lower alcohol esters of the dicarboxylic acids such as terephthalic acid, etc.). These can be used singly as one species or in a combination of two or more species. An aromatic dicarboxylic acid is preferable because the substrate can be readily obtained with an elastic modulus Es' favorable in the art disclosed herein. Particularly preferable dicarboxylic acids include terephthalic acid and 2,6-naphthalene dicarboxylic acid. For instance, it is preferable that terephthalic acid, 2,6-naphthalene dicarboxylic acid, or a combination of these accounts for 50 % by weight or more (e.g. 80 % by weight or more, typically 95 % by weight or more) of the dicarboxylic acid forming the polyester. The dicarboxylic acid may consist essentially of terephthalic acid, essentially of 2,6-naphthalene dicarboxylic acid, or essentially of terephthalic acid and 2,6-napthalene dicarboxylic acid.

Examples of the diol forming the polyester include aliphatic diols such as ethylene glycol, diethylene glycol, polyethylene glycol, propylene glycol, polypropylene glycol, 1,3-propanediol, 1,5-pentanediol, neopentyl glycol, 1,4-butanediol, 1,6-hexanediol, 1,8-octanediol, and polyoxytetramethylene glycol; alicyclic diols such as 1,2-cyclohexanediol, 1,4-cyclohexanediol, 1,1-cyclohexanedimethylol, and 1,4-cyclohexanedimethylol; and aromatic diols such as xylylene glycol, 4,4'-dihydroxybiphenyl, 2,2-bis(4'-hydroxyphenyl)propane, and bis(4-hydroxyphenyl)sulfone. These can be used singly as one species or in a combination of two or more species. In particular, from the standpoint of the transparency, etc., aliphatic diols are preferable; from the standpoint of the substrate's elastic modulus Es', ethylene glycol is particularly preferable. The ratio of the aliphatic diol (preferably ethylene glycol) in the diol forming the polyester is preferably 50 % by weight or higher (e.g. 80 % by weight or higher, typically 95 % by weight or higher). The diol may essentially consist of ethylene glycol.

Specific examples of the polyester-based resin include polyethylene terephthalate (PET), polybutylene terephthalate (PBT), polyethylene naphthalate (PEN), and polybutylene naphthalate.

As the polyolefinic resin, solely one species of polyolefin or a combination of two or more species of polyolefin can be used. Examples of the polyolefin include an α-olefin homopolymer, a copolymer of two or more species of a -olefin, and a copolymer of one, two or more species of a-olefin and another vinyl monomer. Specific examples include polyethylene (PE), polypropylene (PP), ethylene-propylene copolymers such as ethylene-propylene rubber (EPR), ethylene-propylene-butene copolymers, ethylene-butene copolymers, and ethylene-ethyl acrylate copolymers. Either a low-density (LD) polyolefin or a high-density (HD) polyolefin can be used. Examples of the polyolefin resin include non-stretched polypropylene (CPP) film, biaxially-stretched polypropylene (OPP) film, low-density polyethylene (LDPE) film, linear low-density polyethylene (LLDPE) film, medium-density polyethylene (MDPE) film, high-density polyethylene (HDPE) film, polyethylene (PE) film in which two or more species of polyethylene (PE) is blended, PP/PE blend film in which polypropylene (PP) and polyethylene (PE) are blended.

Specific examples of the resin film that can be preferably used as the substrate of the masking sheet disclosed herein include PET film, PEN film, PPS film, PEEK film, CPP film, and OPP film. From the standpoint of obtaining a favorable Et'·Hs³ in a thinner substrate, preferable examples include PET film, PEN film, PPS film, and PEEK film. From the standpoint of the availability of the substrate, etc., PET film and PPS film are particularly preferable; between the two, PET film is preferable.

As long as the effects of this invention are not significantly impaired, the resin film may comprise, as necessary, known additives such as photostabilizer, antioxidant, anti-static agent, colorant (dye, pigment, etc.), filler, slip agent, and anti-blocking agent. The amount of an additive added is not particularly limited and can be suitably selected in accordance with the purpose of the masking sheet, etc.

The method for producing the resin film is not particularly limited. A heretofore known general resin film molding method can be suitably employed, for instance, extrusion molding, inflation molding, T-die casting, and calender roll molding.

The substrate may be formed essentially of such a base film. Alternatively, the substrate may comprise a supplemental layer besides the base film. Examples of the supplemental layer include a visual detectability-adjusting layer (e.g. a colored layer) and an antistatic layer provided to the first or second face of the base film.

The first face of the substrate may be subjected to heretofore known surface treatment as necessary, such as corona discharge treatment, plasma treatment, UV-ray irradiation, acid treatment, alkali treatment, undercoating (primer coating), and antistatic treatment. Such surface treatment may be carried out to increase the tightness of adhesion between the substrate and the PSA layer, that is, the anchoring of the PSA layer to the substrate. The primer composition is not particularly limited. A suitable species can be selected among known species. The thickness of the primer layer is not particularly limited. It is usually suitably about 0.01 μm to 1 μm, or preferably about 0.1 μm to 1 μm.

The second face of the substrate may be subjected to heretofore known surface treatment as necessary, such as release treatment and antistatic treatment. For instance, the back face of the substrate can be provided with a long-chain alkyl-based, olefinic, or silicone-based release layer, etc., to reduce the unwinding force of the protection sheet wound in a roll. In addition, for purposes such as increasing the printability, reducing the light reflection and increasing the ease of application in layers (overlapping application property), the second face of the substrate may be subjected to treatment such as corona discharge treatment, plasma treatment, UV-ray irradiation, acid treatment and alkali treatment.

From the standpoint of the handling properties and the ease of processing the masking sheet, Hs is is 0.30 mm or less; it is preferably 0.20 mm or less, or more preferably 0.15 mm or less (e.g. 0.12 mm or less). With the use of a substrate having a small Hs value, it is easier to make the masking sheet with a smaller thickness Ht. The minimum Hs value is 0.05 mm or greater (typically greater than 0.05 mm). From the standpoint of obtaining a higher $Et' \cdot Hs^3$ value in a readily available or easily manufactured substrate, Hs can also be 0.07 mm or greater, or even 0.08 mm or greater (e.g. 0.10 mm or greater).

The elastic modulus Es' of the substrate is not particularly limited as long as an aforementioned $Et' \cdot Hs^3$ value can be obtained in the masking sheet formed with the substrate. In particular, Es' can be, for instance, 0.3 GPa or greater (typically 0.5 GPa or greater). From the standpoint of the ease of constructing the masking sheet to be highly proof against solution penetration while using a thinner substrate, Es' is advantageously 1.0 GPa or greater, preferably 1.5 GPa or greater, or more preferably 2.0 GPa or greater. The maximum Es' value is not particularly limited. From the standpoint of the availability of the substrate or the ease of its manufacturing, it is usually suitably 30 GPa or less, preferably 20 GPa or less, or more preferably 10 GPa or less (e.g. 6.0 GPa or less). Es' can be adjusted by the composition of the substrate and the materials used therein as well as by the combination of these, etc.

\<PSA layer\>

The PSA layer in the art disclosed herein is typically a layer formed from a material (PSA) that exists as a soft solid (a viscoelastic material) in a room temperature range and has a property to adhere easily to adherend with some pressure applied. As defined in "Adhesion : Fundamental and Practice" by C. A. Dahlquist (McLaren & Sons (1966), P. 143), the PSA referred to herein is generally a material that has a property satisfying complex tensile modulus E* (1Hz) < $10^7$ dyne/cm$^2$ (typically, a material that exhibits the described characteristics at 25 °C).

The PSA layer in the art disclosed herein may be formed from PSA compositions in various forms, such as a water-dispersed PSA composition, water-soluble PSA composition, solvent-based PSA composition, hot-melt PSA composition and active energy ray-curable PSA composition. From the standpoint of the resistance to solution penetration, etc., a solvent-based PSA composition can be preferably used.

The PSA comprises, as the base polymer (the primary component, i.e. a component accounting for more than 50 % by weight, among the polymers), one, two or more species among various polymers that exhibit rubber elasticity in a room temperature range, such as rubber-based polymers, acrylic polymers, polyester-based polymers, urethane-based polymers, polyether-based polymers, silicone-based polymers, polyamide-based polymers, and fluoropolymers that are known in the PSA field. The PSA, from the standpoint of the resistance to chemical solutions, etc., includes a rubber-based PSA. Here, the rubber-based PSA refers to a PSA that comprises one, two or more species of rubber-based polymer as the base polymer.

As the PSA layer of the masking sheet disclosed herein, a rubber-based PSA layer of which the primary component is a rubber-based PSA can be preferably used. The rubber-based PSA may comprise one, two or more species of rubber-based polymer selected from natural rubbers and synthetic rubbers. As used herein, the primary component refers to a component accounting for more than 50 % by weight unless otherwise noted.

The natural rubber is not particularly limited. For example, standard Malaysian rubber (SMR), standard Vietnamese rubber (SVR), ribbed smoked sheets (RSS), pale crepe, and the like can be used.

The Mooney viscosity of the natural rubber in the rubber-based PSA is not particularly limited. For instance, under the measurement conditions for MS(1+4) at 100 °C, the natural rubber may have a Mooney viscosity (Mooney viscosity $MS_{1+4}(100°C)$) of about 10 or higher (typically 30 or higher, preferably 50 or higher, or more preferably 65 or higher). The Mooney viscosity $MS_{1+4}(100°C)$ of the natural rubber is typically 150 or lower; it may be usually 120 or lower (e.g. 100 or lower). In an embodiment, a natural rubber having a Mooney viscosity $MS_{1+4}(100°C)$ of about 10 to 100 (e.g. about 30 to 95) can be used. In another embodiment, a natural rubber having a Mooney viscosity $MS_{1+4}(100°C)$ of about 50 to 90 (e.g. about 65 to 85) can be used. For instance, a natural rubber having a Mooney viscosity $MS_{1+4}(100°C)$ of higher than 70 (typically higher than 70 and 90 or lower, e.g. about 72 to 85) can be preferably used. The Mooney viscosity can be adjusted by a general method such as mastication.

In a preferable embodiment of the natural rubber-containing rubber-based PSA, the natural rubber can be used without mastication or with minor mastication. A rubber-based PSA comprising such a natural rubber tends to exhibit adequate chemical resistance because the natural rubber has a relatively high molecular weight (i.e. it has a long molecular chain). While no particular limitations are imposed, in an embodiment, it is preferable to use a natural rubber having a Mooney viscosity $MS_{1+4}(100°C)$ of higher than 70 (typically higher than 70, but 100 or lower), more preferably 75 or higher (typically 75 to 100), for instance, 80 or higher (typically 80 to 100, or 85 or higher, e.g. 85 to 120 or even 85 to 100). A natural rubber having such a relatively high Mooney viscosity $MS_{1+4}(100°C)$ can be particularly preferably used, for instance, in a non-crosslinked PSA layer described later or in a rubber-based PSA layer (possibly a non-crosslinked PSA layer) in which the rubber-based polymer has a composition essentially formed of a natural rubber.

Specific examples of the synthetic rubber include polyisoprene, polybutadiene, polyisobutylene, butyl rubber, styrene-butadiene rubber (SBR), and a styrene-based block copolymer. Other examples of the synthetic rubber include ethylene-propylene rubber, propylene-butene rubber, and ethylene-propylene-butene rubber. Yet other examples of the synthetic rubber include a grafted natural rubber obtainable by grafting other monomer to a natural rubber. The other monomer can be one, two or more species of monomers that can be grafted to natural rubbers. These synthetic rubbers can be used singly as one species or in a combination of two or more species.

Specific examples of the styrene-based block copolymer include a styrene-isoprene block copolymer, a styrene-butadiene block copolymer, and hydrogenation products of these. Here, the styrene-isoprene block copolymer refers to a copolymer having at least one styrene block and one isoprene block. The same applies to the styrene-butadiene copolymer. The styrene block refers to a segment in which styrene is the primary monomer (a comonomer exceeding 50 % by weight; the same applies hereinafter). A segment essentially formed of styrene is a typical example of the styrene block referred to here. The same applies to the isoprene block and the butadiene block.

While no particular limitations are imposed, as the styrene-based block copolymer, it is possible to use a species having a styrene content of 5 % to 50 % by weight, preferably 10 % to 45 % by weight, or more preferably 12 % to 35 % by weight (e.g. 15 % to 30 % by weight). The styrene content refers to the weight ratio of styrene in the total weight of the block copolymer and can be determined by NMR (nuclear magnetic resonance spectroscopy).

The styrene-based block copolymer may comprise, as the primary component, a polymer having a linear structure such as a diblock copolymer and a triblock copolymer, or a polymer having a radial structure.

An example of preferable rubber-based PSA is a PSA that comprises a natural rubber and a synthetic rubber as the rubber-based polymer. As the synthetic rubber used in combination with the natural rubber, for instance, one, two or more species can be used among the aforementioned various synthetic rubbers. A synthetic rubber having a composition in which styrene is copolymerized can be preferably used, such as a styrene-based block copolymer and SBR. From the standpoint of the residue-free removability, etc., a combination of a natural rubber and a styrene-isoprene block copolymer is particularly preferable. As the styrene-isoprene block copolymer, it is possible to use a species having a styrene content of 5 % to 50 % by weight, preferably 10 % to 45 % by weight, or more preferably 12 % to 35 % by weight (e.g. 15 % to 30 % by weight). A preferable styrene-isoprene block copolymer comprises a polymer having a radial structure as the primary component. Examples of commercial styrene-isoprene block copolymers that can be preferably used include trade name QUINTAC 3460C (available from Zeon Corporation).

In the PSA comprising a natural rubber and a synthetic rubber, the ratio of their amounts contained is not particularly limited. For instance, the composition may include 10 parts to 110 parts by weight (preferably 15 parts to 80 parts by weight, more preferably 20 parts to 40 parts by weight) of the synthetic rubber to 100 parts by weight of the natural rubber.

The weight ratio of the natural rubber and the synthetic rubber combined in the entire PSA layer can be, but is not particularly limited to, typically 30 % to 90 % by weight, preferably 40 % to 80 % by weight, or more preferably 40 % to 70 % by weight, for instance, 45 % to 60 % by weight. In a preferable embodiment, the weight ratio of the natural rubber and the synthetic rubber combined in the entire PSA layer can be 20 % to 70 % by weight (more preferably 20 % to 60 % by weight, e.g. 30 % to 60 % by weight).

Another example of preferable rubber-based PSA is a PSA comprising a rubber-based polymer that is essentially formed of a natural rubber, that is, a PSA in which the natural rubber accounts for 95 % by weight or more (typically 98 % by weight or more, e.g. 99 % by weight or more) of the rubber-based polymer. Yet another example of preferable rubber-based PSA is a PSA in which the rubber-based polymer essentially consists of a synthetic rubber, that is, a PSA in which the synthetic rubber accounts for 95 % by weight or more (typically 98 % by weight or more, e.g. 99 % by weight or more) of the rubber-based polymer.

The art disclosed herein can be preferably implemented in an embodiment of the masking sheet comprising a PSA layer formed of a non-crosslinked PSA. Here, the "PSA layer formed of a non-crosslinked PSA" refers to a PSA layer formed without a deliberate process of forming chemical bonding in the base polymer (i.e. a crosslinking process, e.g. addition of a crosslinking agent, etc.). Such a PSA layer tends to be highly flexible; and therefore, it can be conformable to contours possibly present on the adherend surface, showing tight adhesion to the adherend surface. The PSA layer is also less susceptible to accumulation of internal distortion (even if distortion occurs momentarily, it can be easily dissipated); and therefore, even if it is exposed to, for instance, physical stress or a temperature change after applied, peeling due to internal distortion hardly occurs. Thus, it tends to readily maintain tight adhesion to the adherend surface. Such highly tight adhesion to the adherend surface may advantageously contribute to prevent penetration of chemical solutions. It is particularly meaningful to comprise a PSA layer formed of a non-crosslinked PSA when the masking sheet is applied to a milled member (which may have contours corresponding to mill marks on the surface, e.g. contours differing in height by as much as about 20 $\mu$m) or to a member that is subjected to shot peening before or after the masking sheet is applied. The art disclosed herein can be preferably implemented in an embodiment comprising, for instance, a non-crosslinked rubber-based PSAlayer, wherein the rubber-based polymer in the rubber-based PSAlayer essentially consists of a natural rubber that has a Mooney viscosity $MS_{1+4}(100°C)$ of higher than 70 (typically higher than 70, but 100 or lower), more preferably 75 or higher (typically 75 to 100), for instance, 80 or higher (typically 80 to 100, or 85 or higher, e.g. 85 to 120, or even 85 to 100).

The PSAlayer in the art disclosed herein may comprise a tackifier in addition to the base polymer. The inclusion of the tackifier can increase the adhesive strength to an adherend (a processing object) and increase the reliability (consistency) of masking performance. As the tackifier, commonly-known tackifiers such as rosin-based resins, petroleum-based resins, terpene-based resins, phenolic resins and the like can be used.

Examples of the rosin-based resin include rosin derivatives such as disproportionated rosins, hydrogenated rosins, polymerized rosins, maleinized rosins, and fumarated rosins as well as phenol-modified rosins and rosin esters. Examples of phenol-modified rosins include products of addition reactions of natural rosins or rosin derivatives with phenols as well as phenol-modified rosins resulting from reactions of resole phenolic resins with natural rosins or rosin derivatives. The phenol-modified rosin can be used as a metal salt. Examples of the rosin ester include products of esterification of the rosin-based resins with polyols. Rosin phenol resins can be esterified as well.

Examples of the terpene-based resin include terpene resins, terpene-phenol resins, aromatized terpene resins, and hydrogenated terpene resins.

Examples of the petroleum resin include aliphatic (C5-based) petroleum resins, aromatic (C9-based) petroleum resins, aliphatic/aromatic copolymer (C5/C9-based) petroleum resins, hydrogenated products of these (e.g. alicyclic petroleum resins obtainable by hydrogenating aromatic petroleum resins), and various modified products of these (e.g. products modified with anhydrous maleic acid).

Examples of the terpene-based resin include terpene resins and modified terpene resins.

Examples of the terpene resin include terpenes (typically monoterpenes) such as $\alpha$-pinene, $\beta$-pinene, d-limonene, l-limonene, and dipentene. The terpene resin can be a homopolymer of one species of terpene or a copolymer of two or more species of terpene. Examples of the homopolymer of one species of terpene include $\alpha$-pinene polymer, $\beta$-pinene polymer, and dipentene polymer.

Examples of the modified terpene resin include resins resulting from modifications (phenol modification, styrene modification, hydrogenation, hydrocarbon modification, etc.) of terpene resins as those described above. Specific examples include terpene-phenol resins, styrene-modified terpene resins, and hydrogenated terpene resins. Here, the terpene-phenol resin refers to a polymer that comprises a terpene residue and a phenol residue and its concept encompasses both a copolymer of a terpene and a phenol compound (a terpene-phenol copolymer resin) and a phenol-modification product of a terpene homopolymer or a terpene copolymer (a terpene resin, typically an unmodified terpene resin).

Examples of the phenolic resin include condensation products of formaldehyde and various phenols such as phenol, m-cresol, 3,5-xylenol, p-alkylphenols and resorcinol. Other examples of the phenolic resin include resoles obtainable by base-catalyzed addition reactions of the phenols and formaldehyde as well as novolacs obtainable by acid-catalyzed condensation reactions of the phenols and formaldehyde.

Examples of commercial tackifiers that can be preferably used include, but are not limited to, trade name QUINTONE D-200 (anhydrous maleic acid-modified C5/C9-based petroleum resin, softening point about 100 °C, available from Zeon Corporation), trade name SUMILITE PR12603N (phenol-modified rosin, softening point about 130 °C, available from Sumitomo Bakelite Co., Ltd.), and trade name YS RESIN PX1150 (terpene resin, softening point about 115 °C, available from Yasuhara Chemical Co. Ltd.).

The tackifier content is not particularly limited. It can be selected so that appropriate adhesive performance can be produced in accordance with certain purpose and application. The tackifier content (when two or more species of tackifier are contained, their combined amount) to 100 parts by weight of the base polymer can be, for instance, 5 parts to 500 parts by weight.

In a preferable embodiment, the tackifier content to 100 parts by weight of the base polymer can be 20 parts to 350 parts by weight, preferably 50 parts to 300 parts by weight, or more preferably 65 parts to 250 parts by weight. In another preferable embodiment, the tackifier content to 100 parts by weight of the base polymer can be, for instance, 20 parts to 150 parts by weight; it is preferably 30 parts to 120 parts by weight, or more preferably 40 parts to 100 parts by weight. For instance, the tackifier content can be preferably applied to a rubber-based PSA (typically a PSA comprising a natural rubber and a synthetic rubber together).

In yet another preferable embodiment, the tackifier content to 100 parts by weight of the base polymer can be, for instance, 5 parts to 100 parts by weight; it is preferably 10 parts to 80 parts by weight, or more preferably 15 parts to 60 parts by weight (e.g. 20 parts to 40 parts by weight). For instance, the tackifier content can be preferably applied to a PSA (preferably a non-crosslinked PSA) whose rubber-based polymer essentially consists of a natural rubber.

While no particular limitations are imposed, the masking sheet disclosed herein can be made in an embodiment where the tackifier content in the PSA layer is, for instance, 10 % to 85 % by weight. From the standpoint point of obtaining greater effects of the use of the tackifier, the tackifier content in the PSA layer is usually preferably 15 % by weight or higher, or more preferably 20 % by weight or higher. From the standpoint of the efficiency of removal work from the adherend (processing object), etc., the tackifier content in the PSA layer is usually suitably 75 % by weight or lower, or preferably 70 % by weight or lower.

In a preferable embodiment, the tackifier content in the PSA layer can also be 40 % by weight or higher, or even 50 % by weight or higher (e.g. 60 % by weight or higher). For instance, this tackifier content can be preferably applied to a rubber-based PSA (typically a PSA comprising a natural rubber and a synthetic rubber together).

In another preferable embodiment, the tackifier content in the PSA layer can be 10 % to 70 % by weight, or more preferably 10 % to 50 % by weight (e.g. 15 % to 35 % by weight). For instance, this tackifier content can be preferably applied to a PSA (preferably a non-crosslinked PSA) whose rubber-based polymer essentially consists of a natural rubber.

In the art disclosed herein, as the tackifier, it is preferable to use a species having a softening point (softening temperature) of about 60 °C or higher (preferably about 80 °C or higher, or more preferably about 90 °C or higher). With a tackifier having a softening point at or above the lower limit, the PSA layer is likely to be formed with excellent residue-free removability. The maximum softening point is not particularly limited. For instance, it can be about 200 °C or lower (typically 180 °C or lower). The softening point of a tackifier can be determined based on the softening point test method (ring and ball method) specified in JIS K2207.

In an embodiment of the art disclosed herein, the tackifier can be preferably used in an embodiment comprising a tackifier having a softening point of 120 °C or higher. The tackifier with softening point at or above 120 °C can be used alone or in combination with a tackifier with softening point below 120 °C. In the latter case, the ratio of the tackifier with softening point at or above 120 °C in the total tackifier used is usually suitably 5 % by weight or higher, or preferably 10 % by weight or higher (e.g. 15 % by weight or higher). The maximum ratio of the tackifier with softening point at or above 120 °C can be, for instance, 95 % by weight or lower, or usually suitably 70 % by weight or lower (e.g. lower than 50 % by weight).

In an embodiment of the art disclosed herein, the tackifier can be preferably used in an embodiment comprising a tackifier having a softening point below 120 °C. The tackifier with softening point below 120 °C can be used alone or in combination of a tackifier with softening point at or above 120 °C. In the latter case, the ratio of the tackifier with softening point below 120 °C in the total tackifier used can be, for instance, 30 % by weight or higher; it is usually suitably 50 % by weight or higher, or preferably 70 % by weight or higher. The ratio of the tackifier with softening point below 120 °C can be 95 % by weight or higher, or even 100 % by weight. As the tackifier with softening point below 120 °C, for instance, a terpene-based resin with softening point below 120 °C (typically at or above 80 °C, but below 120 °C) can be preferably used.

For the tackifier, solely one species or a combination of two or more species can be used. For instance, in an embodiment of the art disclosed herein, a combination of a petroleum-based resin and a rosin-based resin can be preferably used as the tackifier. While no particular limitations are imposed, for instance, in a PSA comprising a natural rubber and a synthetic rubber together, a combination of a petroleum-based resin and a rosin-based resin can be preferably used as the tackifier.

When a petroleum-based resin and a rosin-based resin are used in combination, the relation of their amounts used is not particularly limited. In a preferable embodiment, the amount of the petroleum-based resin used to 1 part by weight of the rosin-based resin can be, for instance, 0.1 part to 20 parts by weight; it is usually suitably 0.7 part to 15 parts by weight, or preferably 1.0 part to 10 parts by weight (typically greater than 1.0 part by weight, but 10 parts by weight or less). When the petroleum-based resin is used in an amount of 1.5 parts to 8 parts by weight relative to 1 part by weight of the rosin-based resin, more favorable results can be obtained. In another preferable embodiment, the amount of the rosin-based resin used to 100 parts by weight of the petroleum-based resin can be, for instance, 10 parts to 200 parts by weight; it is usually suitably 20 parts to 120 parts by weight, or preferably 30 parts to 80 parts by weight. The relation of the amounts of the petroleum-based resin and the rosin-based resin used can be preferably applied to, for instance, a rubber-based PSA (typically a PSA comprising a natural rubber and a synthetic rubber together).

In another embodiment of the art disclosed herein, a terpene-based resin can be preferably used as the tackifier. While no particular limitations are imposed, such an embodiment is favorable, for instance, in a PSA (preferably a non-crosslinked PSA) whose rubber-based polymer essentially consists of a natural rubber. The art disclosed herein can be preferably implemented in an embodiment where the terpene-based resin (typically a terpene resin) accounts for more than 50 % by weight (more preferably 70 % by weight or more, typically 85 % by weight or more, e.g. 95 % by weight or more) of the tackifier. For instance, the natural rubber may have a Mooney viscosity $MS_{1+4}(100°C)$ of 80 or higher (typically 80 to 100).

The PSAlayer in the art disclosed herein may be formed from a PSA composition comprising a crosslinking agent. The use of the crosslinking agent tends to enhance the residue-free removability of the masking sheet. As the crosslinking agent, a crosslinking agent known or commonly used in the PSA field can be used, such as an isocyanate-based crosslinking agent, epoxy-based crosslinking agent, silicone-based crosslinking agent, oxazoline-based crosslinking agent, aziridine-based crosslinking agent, silane-based crosslinking agent, alkyl etherified melamine-based crosslinking agent, and metal chelate-based crosslinking agent. For the crosslinking agent, solely one species or a combination of two or more species can be used. The amount of the crosslinking agent used can be, but is not particularly limited to, for instance, 0.1 part to 10 parts by weight relative to 100 parts by weight of the base polymer; it is usually suitably 1 part to 8 parts by weight. Alternatively, essentially no crosslinking agent may be used.

A favorable example of the crosslinking agent is an isocyanate-based crosslinking agent. The isocyanate-based crosslinking agent is typically an isocyanate having at least two isocyanate groups per molecule. The isocyanate can be either an aromatic isocyanate or an aliphatic isocyanate. The isocyanate is preferably an aromatic isocyanate. Examples of commercial aromatic isocyanate-based crosslinking agents include trade name CORONATE L (available from Nippon Polyurethane Industry Co., Ltd.). For the isocyanate-based crosslinking agent, solely one species or a combination of two or more species can be used.

From the standpoint of obtaining greater crosslinking effects, the isocyanate is preferably a polyisocyanate having at least three isocyanate groups per molecule, or more preferably at least one species selected from the group consisting of aromatic polyisocyanates and aliphatic polyisocyanates. Favorable examples of the polyisocyanate include an aromatic diisocyanate-polyol adduct and an aliphatic diisocyanate-polyol adduct. For instance, a compound having terminal isocyanate groups obtainable by a reaction of a polyol and the diisocyanate in excess can be preferably used as the polyisocyanate.

Examples of the aromatic diisocyanate include tolylene diisocyanate, diphenylmethane diisocyanate, 1,5-naphthylene diisocyanate, tolidine diisocyanate, xylylene diisocyanate, and tetramethylxylylene diisocyanate. Among these, from the standpoint of the reactivity, etc., a preferable example is tolylene diisocyanate.

Examples of the aliphatic diisocyanate include 1,6-hexamethylene diisocyanate, 1,4-tetramethylene diisocyanate, 2-methyl-1,5-pentane diisocyanate, 3-methyl-1,5-pentane diisocyanate, lysine diisocyanate, isophorone diisocyanate, cyclohexyl diisocyanate, hydrogenated tolylene diisocyanate, hydrogenated xylene diisocyanate, hydrogenated diphenylmethane diisocyanate, and hydrogenated tetramethylxylene diisocyanate. Among these, from the standpoint of the reactivity, etc., a preferable example is 1,6-hexamethylene diisocyanate.

Examples of the polyol include aliphatic polyols such as ethylene glycol, glycerin, trimethylolpropante, pentaerythritol, di(trimethylolpropane), and dipentaerythritol. Among them, trimethylolpropane is preferable.

The PSAlayer in the art disclosed herein may be formed from a PSA composition comprising a hydroxy group-containing polymer. It is preferable to use the hydroxy group-containing polymer in combination with a hydroxy-reactive crosslinking agent. By this, a flexible crosslinked structure is formed by the reaction of the hydroxy group-containing polymer and the hydroxy-reactive crosslinking agent, and the separability of the PSA layer can be enhanced while degradation of other properties is inhibited. Here, that the PSA is highly separable means the following: when two PSA layers that are adjacent and adjoined to each other (self-adhered) are separated, formation of sticky strings from the PSA forming the PSA layers (local stretching of the PSA into strings) is prevented or inhibited, or the two PSA layers are torn and separated at an early stage of the formation of sticky strings (i.e. before the PSAlayers are greatly deformed). Hereinafter, the PSA's separability may be referred to as the easy-to-detach properties. With the greater easy-to-detach properties of the PSA, edge face deformation of the PSA layers caused by the sticky string formation can be inhibited, whereby solution penetration via deformed areas can be prevented. Accordingly, the combined use of a hydroxy group-containing polymer and a hydroxy-reactive crosslinking agent is particularly meaningful, for instance, in a masking sheet that can be used in a form halfway cut as described later. Since rubber-based PSA generally tends to be susceptible to blocking (it is highly self-adhesive), in the masking sheet having a rubber-based PSA layer, it is particularly meaningful to use a hydroxy group-containing polymer and a hydroxy-reactive crosslinking agent together.

As the hydroxy-reactive crosslinking agent, it is possible to use a compound having a functional group (e.g. isocyanate group, epoxy group, melamine group, aldehyde group, etc.) that is reactive with hydroxy group (preferably a compound having two or more hydroxy-reactive functional groups per molecule).

As the hydroxy group-containing polymer, a polymer having in average one or more (typically 1.5 or more) hydroxy groups per molecule can be preferably used. The number average molecular weight (Mn) of the hydroxy group-containing polymer is not particularly limited. It can be, for instance, about 500 to 500000. From the standpoint of the compatibility and reactivity with other components, the hydroxy group-containing polymer usually has a Mn value of suitably about 500 to 50000, preferably about 500 to 20000, or more preferably about 500 to 10000 (e.g. about 500 to 5000). Mn can be determined based on ASTM D2503.

Non-limiting examples of the hydroxy group-containing polymer include polyethylene-based polyols such as polyethylene glycol, polypropylene-based polyols such as polypropylene glycol, polybutadiene polyols, hydrogenated polybutadiene polyols, polyisoprene polyols, and hydrogenated polyisoprene polyols. From the standpoint of the compatibility with the base polymer, etc., preferable examples include hydrogenated polyisoprene polyols, polyisoprene polyols, polybutadiene polyols and hydrogenated polybutadiene polyols.

From the standpoint of the reactivity, the hydroxy group-containing polymer has a hydroxyl value (mgKOH/g) of 5 or greater (typically 10 or greater, e.g. 20 or greater). From the standpoint of the adhesive strength of the PSA layer, the hydroxyl value (mgKOH/g) of the hydroxy group-containing polymer is preferably 95 or less (typically 80 or less). In a preferable embodiment, a hydroxy group-containing polymer having a hydroxyl value (mgKOH/g) in a range of 20 to 80 can be used. The hydroxyl value can be determined based on JIS K1557:1970.

As the hydroxy group-containing polymer, a commercial product can be used. Examples of the commercial product include Poly bd R-45HT (liquid butadiene having terminal hydroxy groups, Mn 2800, hydroxyl value 46.6 mg-KOH/g, available from Idemitsu Kosan Co., Ltd.), Poly ip (liquid polyisoprene having terminal hydroxy groups, Mn 2500, hydroxyl value 46.6 mgKOH/g, available from Idemitsu Kosan Co., Ltd.), EPOL (hydrogenated liquid polyisoprene having terminal hydroxy groups, Mn 2500, hydroxyl value 50.5 mgKOH/g, available from Idemitsu Kosan Co., Ltd.), GI-1000 (liquid polybutadiene having a hydroxy group, Mn 1500, hydroxyl value 60-75 mgKOH/g, available from Nippon Soda Co., Ltd.), GI-2000 (hydrogenated liquid polybutadiene having a hydroxy group, Mn 2100, hydroxyl value 40-55 mgKOH/g, available from Nippon Soda Co., Ltd.), GI-3000 (liquid polybutadiene having a hydroxy group, Mn 3000, hydroxyl value 25-35 mgKOH/g, Nippon Soda Co., Ltd.), UNISTOLE® P-801 (hydroxy group-containing polyolefin, Mn ≥ 5000, hydroxyl value 40 mgKOH/g, available from Mitsui Chemical, Inc.), and UNISTOLE® P-901 (hydroxy group-containing polyolefin, Mn ≥ 5000, hydroxyl value 50 mgKOH/g, available from Mitsui Chemical, Inc.).

The amount of the hydroxy group-containing polymer contained to 100 parts by weight of the base polymer is not particularly limited. The amount of the hydroxy group-containing polymer contained to 100 parts by weight of the base polymer is usually suitably about 1 part to 20 parts by weight, or preferably about 2 parts to 15 parts by weight (e.g. about 2.5 parts to 10 parts by weight).

In an embodiment, the hydroxy group-containing polymer content can be selected so that the A value in the equation (1) below is ·preferably 1 to 12000, more preferably 10 to 5000, or yet more preferably 25 to 2500 (typically 50 to 1000, e.g. 75 to 500).

$$A = \text{(hydroxyl value (mgKOH/g) of hydroxy group·containing polymer)} \times \text{(parts by weight of hydoxy group·containing polymer to 100 parts by weight of base polymer)} \tag{1}$$

With increasing A value, the easy-to-detach properties of the PSAlayer tend to be enhanced. When the A value is not excessively large, the adhesive properties (e.g. 90° ˙peel strength to duralumin) tend to increase.

In another embodiment, the hydroxy group-containing polymer content can be selected so that the B value in the equation (2) is preferably 0.1 to 20, more preferably 0.2 to 10, or yet more preferably 0.3 to 5, for instance, 0.4 to 3.

$$B = \text{(hydroxyl value (mgKOH/g) of hydroxy group·containing polymer} \times \text{weight (g) of hydroxy group·containing polymer)/weight (g) of PSA layer} \tag{2}$$

With increasing B value, the easy-to-detach properties of the PSAlayer tend to increase. When the B value is not excessively large, the adhesiveness tends to increase.

In an embodiment comprising a hydroxy group-containing polymer and a hydroxy-reactive crosslinking agent (e.g. an isocyanate-based crosslinking agent) together, there are no particular limitations to the relation of the amounts of the hydroxy group-containing polymer and the hydroxy-reactive crosslinking agent contained. The amount of the hydroxy group-containing polymer used to 1 part by weight of the hydroxy-reactive crosslinking agent can be, for instance, 0.1 part to 20 parts by weight. From the standpoint of effectively obtaining the advantages of the crosslinking, it is usually suitably 0.5 part to 15 parts by weight, preferably 1 part to 10 parts by weight, or more preferably greater than 1 part by weight and 5 parts by weight or less (e.g. 1.2 parts to 3 parts by weight).

The PSA composition may comprise one, two or more species of urethanation catalyst. In the PSA composition that comprises a hydroxy group-containing polymer and a hydroxy-reactive crosslinking agent (e.g. an isocyanate-based crosslinking agent) together, it is particularly meaningful to accelerate the crosslinking reaction with the inclusion of the urethanation catalyst. Examples of the urethanation catalyst include tin compounds such as dibutyltin dilaurate and dioctyltin dilaurate; carboxylic acid salts of metals such as zinc, cobalt, copper and bismuth; amine compounds such as 1,4-diazabicyclo[2.2.2]octane; chelates of metals such as iron, titanium, and zirconium. Salts of bismuth with organic acid (salts of bismuth with alicyclic organic acids such as salts of bismuth with resin acids containing abietic acid, neoabietic acid, d-pimaric acid, iso-d-pimaric acid, podocarpic acid, or a combination of two kinds or more thereof, as a main component; salts of bismuth with aromatic organic acids such as benzoic acid, cinnamic acid and p-oxycinnamic acid; and the like) can also be used. Among these, in view of the compatibility with the PSA and the urethanation reactivity, iron chelates, dibutyltin dilaurate, dioctyltin dilaurate and salts of bismuth with resin acids are preferable; in view of the reactivity, iron chelates are more preferable. The urethanation catalyst content is not particularly limited. For instance, it can be about 0.001 part to 2.0 parts by weight (preferably 0.005 part to 1.5 parts by weight, more preferably 0.008 part to 1.0 part by weight) to 100 parts by weight of the base polymer.

As long as the effects of this invention are not impaired, the PSAlayer in the art disclosed herein may further comprise, as necessary, known additives that can be used in PSA, such as leveling agent, crosslinking aid, plasticizer, softener, colorant (dye, pigment, etc.), filler, antistatic agent, anti-aging agent, UV absorber, antioxidant, and photostabilizer. As the anti-aging agent, for instance, a phenolic anti-aging agent can be preferably used. The amount of the anti-aging agent added to 100 parts by weight of the base polymer can be, for instance, 0.1 part to 10 parts by weight, or preferably 0.5 part to 5 parts by weight. An example of commercial products of such anti-aging agent is trade name NOCRAC NS-6 (available from Ouchi Shinko Chemical Industrial Co., Ltd.).

<Masking sheet>

The masking sheet disclosed herein can be formed by a heretofore known method. For instance, a direct method can be employed where the PSA composition is directly provided (typically applied) to a substrate as those described earlier and allowed to dry to form a PSA layer. A transfer method can also be employed where the PSA composition is provided to a releasable surface (release face) and allowed to dry to form a PSAlayer on the surface and the PSAlayer is transferred to a substrate. These methods can be combined as well. For the release face, a release liner surface, the substrate's back face that has been subjected to release treatment and the like can be used.

The PSA composition can be applied, for instance, using a heretofore known coater such as a gravure roll coater, a die coater, and a bar coater. From the standpoint of accelerating the crosslinking reaction, increasing the productivity, etc., the PSA composition is preferably dried with heat. The drying temperature can be, for instance, about 40 °C to 150 °C, or usually preferably about 60 °C to 130 °C.

The thickness of the PSAlayer is not particularly limited and can be suitably adjusted in accordance with a certain purpose. The PSA layer's thickness can be, for instance, about 1 $\mu$m to 100 $\mu$m. From the standpoint of the tightness of adhesion to the adherend surface, the thickness is favorably 5 $\mu$m or greater, or more preferably 10 $\mu$m or greater. In an application where it is adhered to a shot peened surface, the PSA layer's thickness is preferably 15 $\mu$m or greater, or more preferably 20 $\mu$m or greater.

From the standpoint of inhibiting solution penetration via edge faces of the PSA layer (solution penetration caused by swelling of the PSA), the PSA layer's thickness is preferably 80 $\mu$m or less, more preferably 60 $\mu$m or less, or yet more preferably 50 $\mu$m or less. In a favorable example of the masking sheet disclosed herein, the PSA layer's thickness can be 20 $\mu$m to 40 $\mu$m.

The release liner is not particularly limited. For instance, it is possible to use a release liner having a release layer on the surface of a liner substrate such as resin film and paper (possibly laminated with a resin such as polyethylene), a release liner formed of a low-adhesive material such as a fluoropolymer (polytetrafluoroethylene, etc.) and a polyolefinic resin (polyethylene, polypropylene, etc.), and the like. The release layer may be formed by subjecting the liner substrate to surface treatment with a release agent such as silicone-based, long-chain alkyl-based, olefinic, and fluorine-based release agents as well as molybdenum sulfide.

In an embodiment of the art disclosed herein, it is preferable to use a release layer formed using a silicone-based release agent.

In another embodiment, a release layer formed with a non-silicone-based release agent can be used. Specific examples of the non-silicone-based release agent include long-chain alkyl-based release agents, olefinic release agents and fluorine-based release agents. Examples of preferable non-silicone-based release agents include long-chain alkyl-based release agents and olefinic release agents. In particular, long-chain alkyl-based release agents are preferable.

As for the release agent used for forming a release layer on the second face of the substrate, the same kinds can be preferably used.

There are no particular limitations to the embodiment of the anodizing process carried out using the masking sheet disclosed herein. It can be general chromic acid anodizing, phosphoric acid anodizing, boric acid anodizing, sulfuric acid anodizing, sulfuric acid/boric acid anodizing, etc. The material or the shape of the article to be anodized (processing object) is not particularly limited. The processing object is typically a light metal member. Here, the light metal member refers to a metal member having a surface formed of solely a light metal species such as aluminum, magnesium and titanium or an alloy (light alloy) whose primary component is the light metal species. An aluminum member refers to a metal member having a surface formed of aluminum or an aluminum alloy (an alloy whose primary component is aluminum). Examples of the aluminum alloy include the 2000 series alloys, 3000 series alloys, 4000 series alloys, 5000 series alloys, 6000 series alloys, and 7000 series alloys. Preferable objects to which the masking sheet disclosed herein is applied include an aluminum member having a surface formed of aluminum (typically a 1000-series aluminum) or a 2000-series alloy (e.g. duralumin A2024, duralumin A2017, etc.).

Favorable examples of the article to be anodized include metal members used as exterior members and other building members of transportation equipment. Specific examples of the transportation equipment include motor vehicles (including passenger cars, trucks, buses, motor tricycles, tractors, snow mobiles, bulldozers, and amphibious vehicles), railroad vehicles (including trains such as bullet trains, diesel vehicles, maglev trains, cable cars, monorail vehicles, and trolley buses), aircrafts (including airplanes, helicopters, and air cushion crafts), and vessels (including large ships, small ships, and water scooters). Favorable examples include aluminum members (typically duralumin members) for exterior panels of an airplane.

The surface of the metal member subjected to anodizing may be subjected to shot peening in advance. The metal member can also be milled for purposes such as thickness adjustment. Alternatively, as necessary, at an arbitrary timing, the metal member can be subjected to a common process such as washing, degreasing, drying, etching and aging. For instance, an etching step may be included between a shot peening process and CS treatment (anodizing). The masking sheet used in the etching step can be used continuously as the masking sheet for anodizing; or the masking sheet for the etching step can be removed after the etching process and a masking sheet for anodizing can be newly applied.

While no particular limitations are imposed, the masking sheet disclosed herein can be preferably used as a masking sheet applied to non-target areas of such a metal member, for instance, when anodizing the metal member. In particular, it is favorable as a masking sheet used in anodizing a light metal member.

The masking sheet disclosed herein can be preferably applied to an article (typically a metal member, in particular, a member made of a light metal such as aluminum and an aluminum alloy) that is further subjected to another process (a subsequent process) after an anodizing process. The subsequent process can be a process of forming an undercoat layer (a primer layer), a coating process, etc., that are provided to the anodized article. The subsequent process may be a process of sealing the anodic oxidation coating formed by the anodizing process. The subsequent process may be a CS treatment (e.g. a process of applying a liquid such as an aqueous or solvent-based primer and an aqueous or solvent-based paint) or a process not involving a chemical solution (a dry process such as a powder coating process).

While no particular limitations are imposed, the masking sheet disclosed herein can be made in an embodiment where it has a 90° peel strength (to-duralumin 90° peel strength) of, for instance, about 0.5 N/20mm or greater when determined using a smooth duralumin A2024 plate as the adherend. From the standpoint of the tightness of adhesion to the processing object, etc., the to-duralumin 90° peel strength is usually advantageously 1.0 N/20mm or greater, or preferably 1.5 N/20mm or greater (e.g. 2.0 N/20mm or greater). From the standpoint of greater retention of the tightness of adhesion to the processing object, the to-duralumin 90° peel strength is preferably 3.0 N/20mm or greater; it can also be, for instance, 4.5 N/20mm or greater. The maximum to-duralumin 90° peel strength is not particularly limited. From the standpoint of the efficiency of removal work and the residue-free removability, it is usually suitably 25 N/20mm or less, or preferably 20 N/20mm or less (typically 15 N/20mm or less, e.g. 10 N/20mm or less). The to-duralumin 90° peel strength can be determined based on JIS Z0237 as follows: at a measurement temperature of 23 °C, the masking sheet is applied to a duralumin plate (a smooth duraluminA2024 plate); after 30 minutes, the masking sheet is peeled at a tensile speed of 300 mm/min in the 90° direction relative to the surface of the duralumin plate.

The to-duralumin 90° peel strength can be adjusted, for instance, by the composition of the PSA layer forming the PSA sheet, the thickness of the PSA layer, etc.

While no particular limitations are imposed, the masking sheet disclosed herein preferably shows residue-free removability relative to the processing object (adherend). For instance, in the to-duralumin 90° peel strength measurement, it is preferable that no leftover adhesive residue is present on the duralumin plate.

While no particular limitations are imposed, in the solution penetration proof test described later in the working examples, the masking sheet disclosed herein has a solution penetration distance (on a duralumin plate) of preferably 5 mm or less, more preferably 3 mm or less, or yet more preferably 1 mm or less. The masking sheet that is highly proof against solution penetration as this can be preferably used in an embodiment where, after the anodizing process, a subsequent process is carried out with the masking sheet being continuously adhered on the adherend.

In a coating step carried out after the anodizing step, the masking sheet can be used to mask coating-unrequired areas (non-target areas) as well. In a preferable embodiment of the coating step, the processing object may be coated while it still (continuously) has the masking sheet adhered thereon during the anodizing process. As described here, by continuously using the masking sheet used in the anodizing step through the downstream coating step, the hassle of replacing the masking sheet (generally including the work of removing the masking sheet used in the anodizing step from the processing object, the work of cleaning the surface of the processing object after the removal, and applying a new masking sheet) can be omitted to increase the productivity of an anodized metal product. It can also reduce the consumption of the masking sheet; and thus, it is preferable from the standpoint of saving resources as well.

The concept of paint (coating material) referred to herein encompasses an undercoat (sometimes called a primer), intermediate coat, and a finish coat (sometimes called a topcoat). The form of the paint used in the coating step is not particularly limited. It can be in forms of an aqueous paint, a solvent-based paint, a powder paint, etc.

When the paint accumulates at an edge face (i.e. at a bump formed with a periphery of the masking sheet and the processing object) of the masking sheet in the coating step, depending on the composition of the solvent forming the paint and the composition of the PSA layer, the PSA forming the PSA layer may dissolve into the paint accumulated at the edge face of the PSA layer. Subsequently, when the paint accumulated at the edge face of the PSA layer is allowed to dry, the PSA dissolved out of the PSAlayer typically forms a thin film that spreads outward from the masking sheet. This thin film is likely to be left (as leftover adhesive residue) on the processing object when the masking sheet is removed. Thus, from the standpoint of increasing the residue-free removability, it is desirable to reduce paint accumulation (especially accumulation of a solvent-based paint) at edge faces of the masking sheet. To reduce paint accumulation, the smaller the thickness Ht of the masking sheet is, the more advantageous it is. The masking sheet used continuously from the anodizing step through the coating step has a thickness Ht of preferably 0.30 mm or less, more preferably 0.25 mm or less (e.g. 0.20 mm or less), or yet more preferably 0.15 mm or less (typically less than 0.15 mm).

<PSA products>

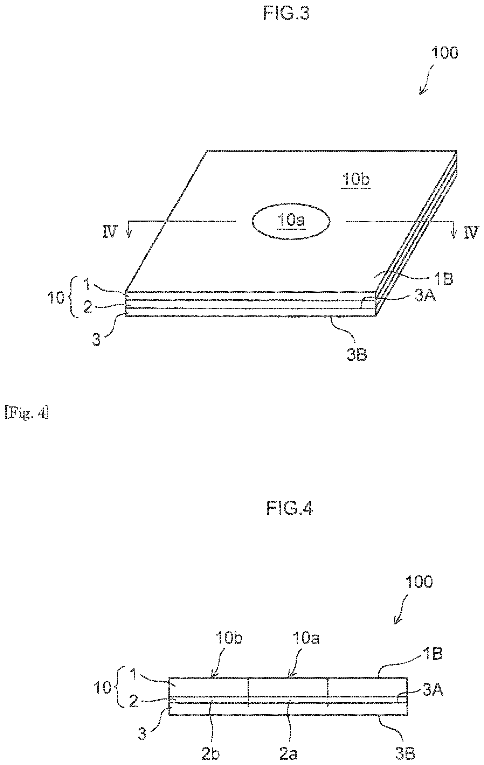

The masking sheet before applied to a processing object can be thought as a PSA product used for masking non-target areas of the processing object. Such a PSA product can be formed as a release liner-supported masking sheet comprising a masking sheet disclosed herein and a release liner protecting the adhesive face of the masking sheet. In a preferable embodiment of the PSA product, for instance, as shown in Fig. 3, a masking sheet 10 constituting a release liner-supported masking sheet (PSA product) 100 is divided into adjacent first and second PSA pieces 10a and 10b on a release liner 3 that is continuous (in one piece). For instance, in the example shown in Fig. 3, the outer circumference of the first circular PSA piece 10a and the inner circumference of the second PSA piece 10b surrounding the first PSApiece 10a are adjacent. Such a PSA product 100 can be obtained, for instance, as shown in Fig. 4, by cutting the masking sheet 10 supported on the release liner 3 from the second face 1B side of a substrate 1 to a depth that does not reach the back face 3B (opposite from the PSA layer side surface) of the release liner 3 (i.e. to a depth at most that does not completely divide the release liner 3). Hereinafter, such a cutting mode that divides the masking sheet, but not the release liner and a cut formed in such a cutting mode may be called "halfway cut (cutting)."

The halfway cut PSA product 100 is typically used in an embodiment where the first PSA piece 10a is separated from the second PSA piece 10b and the release liner 3 with the second PSA piece 10b left on the release liner 3, and the separated first PSA piece 10a is applied to an area to be masked of the processing object. By handling the unapplied first PSApiece 10a as a halfway cut PSA product 100, it can be handled in the same way regardless of the size and the shape of the first PSApiece 10a. This is particularly meaningful when the first PSApiece 10a has a relatively complex shape and when the first PSApiece 10a is in a relatively small size. In addition, because at least part of the release liner 3 extends over the first PSA piece 10a, it is also advantageous in view of the handling properties (the easy-to-pick-up properties) for peeling the first PSA piece 10a from the release liner 3.

In such a halfway cut PSA product, with the time after the cutting (halfway cutting), between the adjacent first and second PSA pieces 10a and 10b, the PSA layers 2a and 2b tend to adjoin each other at the opposing cut edges, for instance, as shown in Fig. 4. Because of this, depending on the composition of the PSA, the time elapsed after the halfway cutting, the storage conditions for the PSAproduct, etc., blocking may occur at the opposing edge faces between the PSA layers 2a and 2b, leading to formation of sticky strings when the first PSApiece 10a is separated from the second PSA piece 10b. The formation of sticky strings may result in irreversible deformation of the edge face of the PSA layer 2a. When an edge face of the PSA layer is deformed, the deformed part can initiate solution penetration. Thus, in a halfway cut PSAproduct for masking purposes, by inhibiting the blocking of the PSA at the cut edges or by increasing the separability of the PSA, the formation of sticky strings can be prevented or inhibited to further enhance the masking performance or its reliability (consistency).

In the art disclosed herein, as a means of preventing or inhibiting the formation of sticky strings, it is preferable to employ a means of crosslinking the PSAby a reaction of a hydroxy group-containing polymer and a hydroxy-reactive crosslinking agent. In other words, it is effective to make the PSA to have a crosslinked structure with the hydroxy group-containing polymer and the hydroxy-reactive crosslinking agent. For instance, when an isocyanate-based crosslinking agent is used as the hydroxy-reactive crosslinking agent, the PSA having such a crosslinked structure can be thought as a PSA having urethane bonding. According to the PSA having a crosslinked structure upon the reaction of the hydroxy group-containing polymer and the hydroxy-reactive crosslinking agent as described here, the separability of the PSA can be increased for separation of the first PSA piece from the second PSA piece and the edge face deformation of the PSAlayer can be inhibited. Especially, when using a PSAproduct having a PSAlayer formed with a highly self-adhesive rubber-based PSA in a halfway cut form, it is effective to constitute the PSAproduct to comprise a rubber-based PSAlayer crosslinked by a reaction of a hydroxy group-containing polymer and a hydroxy-reactive crosslinking agent. Accordingly, matters disclosed by the present description include a PSA sheet for masking purposes, the PSA sheet comprising a substrate having first and second faces and a PSA layer placed on the first face side of the substrate, wherein the PSAlayer is formed with a PSA crosslinked by a reaction of a hydroxy group-containing polymer and a hydroxy-reactive crosslinking agent. Because the formation of sticky strings is prevented or inhibited (i.e. the separability is good), the PSA sheet having such a constitution is suitably used in an embodiment where it is halfway cut and then applied to an adherend.

The release liner constituting such a halfway cut PSA product is not particularly limited. For instance, a suitable species can be selected and used among the aforementioned various types of release liners. In an embodiment, it is preferable to use a release liner having a release layer on a face of a liner substrate made of paper (typically made of paper laminated with polyethylene resin on one or each face) and a release liner having a release layer on a face of a resin film. A favorable example of such a release liner is a release liner comprising a liner substrate that is formed of paper laminated with polyethylene resin (i.e. polyethylene-laminated paper) and has a release layer on the laminated face thereof. The release layer is not particularly limited. For instance, a preferable release layer is formed using a silicone-based release agent. Another preferable release layer is formed using a non-silicone-based release agent, for instance, a long-chain alkyl release agent or an olefinic release agent. By this, an excessive increase in lightness of peeling (release) may be inhibited and the handling properties may be increased during the halfway cutting process or the separation of a halfway cut PSA piece.

<Masking sheet with solution penetration detectability>

In a preferable embodiment, the masking sheet disclosed herein can be formed so that solution penetration into the masking sheet can be visually detected when inspected from the outer face side of the masking sheet. Here, the outer face of the masking sheet refers to the surface opposite from the adhesive face. Usually, the second face of the substrate is the outer face of the masking sheet.

As used herein, solution penetration into a masking sheet refers to penetration of a chemical solution, with the penetration being internal towards the center relative to the outer perimeter of the masking sheet, and internal towards the adhesive face side relative to the outer face of the masking sheet, when the masking sheet adhered on the adherend is inspected from the outer face side. Thus, in the present description, the concept of solution penetration into the masking sheet encompasses penetration of a chemical solution via the interface between the adhesive face of the masking sheet and the adherend surface into an area to which the masking sheet is adhered (into a masked area) as well as penetration of a chemical solution into the masking sheet itself.

As used herein, that solution penetration into a masking sheet is "visually detectable" means that the solution penetration can be detected by a human eye. In typical, solution penetration into a masking sheet can be visually detected by identifying an external difference by eye between an area with solution penetration and an area without solution penetration. The external difference can be various changes that are associated with solution penetration and can be visually recognized. For instance, it can be one, two or more changes among a color change (discoloration), a change in optical transmittance, a change in uniformity (e.g. uneven appearance and blemishing), a change in refractive index, and a change in fluorescence intensity. The color change may accompany a change in one, two or more among chromaticity, saturation and brightness.

The masking sheet disclosed herein may allow visual detection of solution penetration into the masking sheet while it is adhered on the adherend (i.e. without its removal from the adherend). From the standpoint of the ease of visual detection, the masking sheet is preferably formed so that solution penetration can be visually detected by a naked eye. Nonetheless, for actual visual detection, the use of a device such as a magnifier or a scope for remote observation is acceptable for purposes such as facilitating judging whether or not the solution penetration is at or below a certain reference level, increasing the accuracy of the judgement, and reducing the load of a worker.

The masking sheet is satisfactory if, as a whole, it allows visual detection of solution penetration when inspected from the outer face side. For instance, when the outer face of the masking sheet is divided into some imaginary sections, it is satisfactory if solution penetration can be visually detected at least in some sections. It is unnecessary that solution penetration can be visually detected in each of all the individual sections. Of course, solution penetration may be detected in each section alone.

The masking sheet disclosed herein is typically formed to show optical transmittance at least partially in external view of the masking sheet. With increasing optical transmittance of the masking sheet, the possibility of visual detection (visual detectability) of solution penetration tends to increase.

The level of optical transmittance of the masking sheet can be assessed, for instance, by its haze value. Here, the "haze value" refers to the ratio of diffused light transmittance to total light transmittance when the analytical sample is irradiated with visible light. It is also called the cloudiness value. The haze value can be expressed by the equation below. Here, Th is the haze value (%), Td is the diffused light transmittance, and Tt is the total light transmittance.

$$\text{Th (\%)} = \text{Td/Tt} \times 100$$

The haze value can be adjusted by the selection of the compositions, thicknesses, and surface conditions of the substrate and the PSA layer forming the masking sheet, etc. The haze value can be determined by the method described later in the working examples.

The masking sheet according to a preferable embodiment has at least partially an area having a haze value of 90 % or lower. From the standpoint of obtaining greater visual detectability, the masking sheet preferably has an area with haze value at or below 70 %, more preferably an area with haze value at or below 50 % , or yet more preferably an area with haze value at or below 35 %. The minimum haze value is not particularly limited. For instance, it can be 5 % or higher (typically 10 % or higher).

In a masking sheet having highly-detectable areas and poorly-detectable areas as described later, it is preferable that at least the highly-detectable areas have a haze value in the ranges described above. Both the highly-detectable areas and the poorly-detectable areas may have haze values in the ranges described above.

The masking sheet is not particularly limited in color. It can be colored or colorless. Here, the meaning of "being colored" includes black and metallic colors. The term "colorless" means to include white. For instance, a colorless masking sheet is preferable.

The masking sheet is preferably formed so that the masking sheet itself is suitably visible. With increasing visibility of the masking sheet, it tends to be easier to recognize the location and the shape of the masking sheet by eye. This is advantageous in view of visibly detecting defects such as displacement, wrinkling, and falling of the masking sheet as well as faults such as an area inappropriately left without the masking sheet. However, with increasing visibility of the masking sheet, the detectability of solution penetration into the masking sheet tends to decrease.

The masking sheet disclosed herein can be formed so that, when the masking sheet is inspected from its outer face, it has areas where solution penetration is relatively highly visually detectable (i.e. highly-detectable areas) and areas where it is relatively poorly visually detectable (i.e. poorly-detectable areas). According to such an embodiment, with the presence of the poorly-detectable areas, the visibility of the masking sheet can be increased. According to the masking sheet in this embodiment, visual detectability of solution penetration and visibility of the masking sheet can be favorably combined.

The highly-detectable areas and the poorly-detectable areas can be formed so that the visual detectability of solution penetration changes in a non-continuous manner between these areas. Alternatively, it can be formed so that the visual detectability of solution penetration continuously (gradually) changes between the highly-detectable areas and the poorly-detectable areas.

The shapes and arrangement of the highly-detectable areas and the poorly-detectable areas are not particularly limited. In a preferable embodiment, the highly-detectable areas and the poorly-detectable areas can be placed so that they are mixed when inspected from the outer face side of the masking sheet. For instance, it is preferable that the highly-detectable areas and the poorly-detectable areas are almost evenly mixed (dispersed) over the entire masking sheet. For instance, it can be in an embodiment where the poorly-detectable areas are approximately evenly placed among the highly-detectable areas, for instance, in lines (stripes, wavy stripes, etc.), dots (circular, polygonal, irregularly-shaped, etc.), and so on. The masking sheet in such an embodiment is easy to use because it works equally well when cut to an arbitrary shape.

The poorly-detectable areas may have a relatively higher haze value as compared to the highly-detectable areas. The haze value of the poorly-detectable areas should just be higher than that of the highly-detectable areas and is not particularly limited. The haze value of the poorly-detectable areas can be, for instance, 95 % or higher, or it can be essentially 100 %. While no particular limitations are imposed, the difference in haze value between the highly-detectable areas and the poorly-detectable areas can be typically 15 % or greater, for instance, 30 % or greater. From the standpoint of obtaining greater effects of having the highly-detectable areas and the poorly-detectable areas, the difference in haze value is preferably 50 % or greater, or more preferably 70 % or greater.

The masking sheet having highly-detectable areas and poorly-detectable areas can be obtained, for instance, by using a substrate having a detectability-adjusting layer corresponding to the shapes and arrangement of the poorly-detectable areas. While no particular limitations are imposed, the detectability-adjusting layer can be, for instance, a colored layer formed by printing an ink comprising a suitable colorant (pigment or dye) on the substrate. The detectability-adjusting layer can be a metal deposition layer formed by vapor deposition of a metal on the substrate. From the standpoint of avoiding influence of a chemical solution on the detectability-adjusting layer, the detectability-adjusting layer is advantageously formed on the first face of the substrate. In another example of the method for forming poorly-detectable areas, some areas in the first or second face of the substrate are roughened to decrease the optical transmittance in these areas. The roughening can be done by suitably employing a chemical means such as CS treatment or a physical means such as abrasion.

The masking sheet disclosed herein can be formed so that its color changes where solution penetration occurred upon the solution penetration. According to such an embodiment, by detecting a color change in the masking sheet, solution penetration can be easily recognized by eye. The location for the color change is not particularly limited. It can be anywhere as long as the color change can be visually detected when inspected from the outer face side of the masking sheet. For instance, the color change may occur in the substrate, in the PSA layer, or in both the substrate and the PSA layer. The masking sheet may comprise a component that accelerates the color change. This can increase the visual detectability of solution penetration. For instance, when the masking sheet is used for CS treatment using an acidic solution, an indicator that turns colored or undergoes a color change under an acidic condition can be included in the PSAlayer. The indicator can be placed entirely and evenly, or can be placed locally. For instance, it can be in an embodiment where the indicator is placed only at the peripheries of the masking sheet, in an embodiment where it is placed in areas corresponding to certain markers.

In the masking sheet with visual detectability, the thickness of the substrate can be, but is not particularly limited to, for instance, 0.50 mm or less; it is preferably 0.30 mm or less, more preferably 0.20 mm or less, or yet more preferably 0.15 mm or less (e.g. 0.12 mm or less). A smaller thickness of the substrate tends to result in a lower haze value of the masking sheet and enhanced visual detectability of solution penetration. In a preferable embodiment, the substrate's thickness can be 0.10 mm or less, or even 0.09 mm or less.

The masking sheet for anodizing disclosed herein can be favorably used for purposes other than anodizing (typically for a masking purpose during chemical solution treatment).

[Examples]

Several working examples related to the present invention are described below, but the present invention is not limited to these specific examples. In the description below, "parts" and "%" are by weight unless otherwise specified.

<Preparation of PSA composition>

(PSA composition A)

In toluene, were dissolved 100 parts of a natural rubber (Mooney viscosity $MS_{1+4}$(100 °C) = 75), 30 parts of a styrene-isoprene block copolymer (trade name QUINTAC 3460C available from Zeon Corporation, radial structure, 25 % styrene content), 80 parts of an anhydrous maleic acid-modified C5/C9-based petroleum resin (trade name QUINTONE D-200 available from Zeon Corporation), 40 parts of a phenol-modified rosin (trade name SUMILITE PR12603N available from Sumitomo Bakelite Co., Ltd.) and 1 part of a phenol-based anti-aging agent (trade name NOCRAC NS-6 available from Ouchi Shinko Chemical Industrial Co., Ltd.). To this, was added 3 parts of an aromatic isocyanate (trade name CORONATE L available from Nippon Polyurethane Industry Co., Ltd.; a tolylene diisocyanate-trimethylolpropane adduct) as a crosslinking agent to prepare a PSA composition A.

(PSA composition B)

In toluene, were dissolved 100 parts of a natural rubber (Mooney viscosity $MS_{1+4}$(100 °C) = 75), 30 parts of a styrene-isoprene block copolymer (trade name QUINTAC 3460C available from Zeon Corporation, radial structure, 25 % styrene content), 200 parts of an anhydrous maleic acid-modified C5/C9-based petroleum resin (trade name QUINTONE D-200 available from Zeon Corporation), 40 parts of a phenol-modified rosin (trade name SUMILITE PR12603N available from Sumitomo Bakelite Co., Ltd.), 4.5 parts of a hydroxy group-containing polymer (trade name EPOL available from Idemitsu Kosan Co., Ltd; hydrogenated liquid polyisoprene having terminal hydroxy groups, Mn 2500, hydroxyl value 50.5 mgKOH/g) and 1 part of a phenol-based anti-aging agent (trade name NOCRAC NS-6 available from Ouchi Shinko Chemical Industrial Co., Ltd.). To this, was added 3 parts of an aromatic isocyanate (trade name CORONATE L available from Nippon Polyurethane Industry Co., Ltd.; a tolylene diisocyanate-trimethylolpropane adduct) as a crosslinking agent to prepare a PSA composition B.

(PSA composition C)

In toluene, were dissolved 100 parts of a natural rubber, 30 parts of a terpene resin (trade name YS RESIN PX1150 available from Yasuhara Chemical Co. Ltd.) and 3 parts of a phenol-based anti-aging agent (trade name NOCRAC NS-6 available from Ouchi Shinko Chemical Industrial Co., Ltd.) to prepare a PSA composition C. As the natural rubber, a pale crepe (thick pale crepe 1x) with Mooney viscosity $MS_{1+4}$(100°C) ≥ 90 was used without further mastication.

<Fabrication of masking sheets>

(Example 1)

The PSA composition A was applied to one face of a release liner obtained by treating high-grade paper laminated with polyethylene resin on each side with a silicone-based release agent, allowed to dry in an oven at 100 °C with air circulation for three minutes to form a 30 μm thick PSAlayer. The first face of a 125 μm thick PET film (trade name LUMIRROR available from Toray Industries, Inc.) as the substrate was adhered to the PSAlayer on the release liner to obtain a masking sheet according to Example 1. The release liner was left on the PSAlayer as it was and used to protect the adhesive face of the masking sheet.

(Examples 2-4)

As the substrate, PET films of 100 μm thickness (Example 2), 75 μm thickness (Example 3) and 50 μm (Example 4) (each under trade name LUMIRROR, available from Toray Industries, Inc.) were used. Otherwise in the same manner as Example 1, masking sheets according to Examples 2 to 4 were obtained.

(Examples 5, 6)

As the substrate, PEN films of 75 μm thickness (Example 5) and 50 μm (Example 6) (both available from Teijin Limited) were used. Otherwise in the same manner as Example 1, masking sheets according to Examples 5 and 6 were obtained.

(Examples 7, 8)

As the substrate, PPS films of 75 μm thickness (Example 7) and 100 μm (Example 8) (both available from Toray Industries, Inc.) were used. Otherwise in the same manner as Example 1, masking sheets according to Examples 7 and 8 were obtained.

(Example 9)

As the substrate, a CPP film of 100 μm thickness (available from Toray Industries, Inc.) was used. Otherwise in the same manner as Example 1, a masking sheet according to Example 9 was obtained.

(Example 10)

In place of the PSA composition A, the PSA composition B was used. Otherwise in the same manner as Example 2, a masking sheet according to Example 10 was obtained.

(Example 11)

In place of the PSA composition A, the PSA composition C was used. Otherwise in the same manner as Example 2, a masking sheet according to Example 11 was obtained.

<Solution penetration proof test>

(On smooth duralumin plate)

A circle of 25 mm diameter was punched out from the masking sheet according to each Example along with the release liner protecting the adhesive face. In a standard environment at 23 °C and 65 % RH, the release liner was removed from the punched out masking sheet (test piece) and the exposed adhesive face was press-bonded to an adherend with a 2 kg roller moved back and forth once. As the adherend, a pre-degreased duralumin plate (a smooth duralumin A2024 plate) of 200 mm length, 100 mm width and 1 mm thickness was used. The sample to which the test piece was thus adhered was left standing in the standard environment for 30 minutes, suspended in a chromic acid anodizing solution, and anodized at a liquid temperature of 40 °C at a voltage of 20 V for 35 minutes. With respect to the masking sheet according to each Example, five samples were fabricated and subjected to the anodizing process (i.e. N = 5).
While the masking sheet (test piece) is adhered on the anodized sample, the state of solution penetration was visually inspected from the back face of the masking sheet. When solution penetration was observed, the distance of the solution penetration was measured from the periphery of the test piece in the radial direction and the maximum distance of penetration in each sample was recorded as the solution penetration distance of the sample. With respect to the masking sheet according to each Example, the average value of the solution penetration distances of the five samples was determined.

(On milled duralumin plate)

In place of the smooth duralumin plate, a duralumin plate having a milled surface (a milled plate) was used as the adherend. Otherwise in the same manner as the above, the adherend with the masking sheet according to each Example adhered thereon was anodized and the solution penetration distance was determined.
The results are shown in Table 1.

[Table 1]

Table 1

| | | Substrate Material | PSA species | Et' (GPa) | Hs (mm) | Et'×Hs$^3$ (N-mm) | Ht (mm) | Penetration distance (mm) | |
| --- | --- | --- | --- | --- | --- | --- | --- | --- | --- |
| | | | | | | | | smooth | milled |
| Ex. 1 | | PET | A | 2.34 | 0.125 | 4.57 | 0.155 | 0.3 | 0.6 |
| Ex. 2 | | PET | A | 2.34 | 0.100 | 2.34 | 0.130 | 0.4 | 0.6 |
| Ex. 3 | | PET | A | 2.34 | 0.075 | 0.99 | 0.105 | 0.9 | 1.1 |
| Ex. 4 | | PET | A | 2.34 | 0.050 | 0.29 | 0.080 | 6.5 | - |
| Ex. 5 | | PEN | A | 5.11 | 0.075 | 2.16 | 0.105 | 0.8 | 1.0 |
| Ex. 6 | | PEN | A | 5.11 | 0.050 | 0.64 | 0.080 | 6.2 | - |
| Ex. 7 | | PPS | A | 3.54 | 0.075 | 1.49 | 0.105 | 0.8 | 1.0 |
| Ex. 8 | | PPS | A | 3.54 | 0.100 | 3.54 | 0.130 | 0.5 | 0.8 |
| Ex. 9 | | CPP | A | 0.68 | 0.100 | 0.68 | 0.130 | 7.1 | - |
| Ex. 10 | | PET | B | 2.34 | 0.100 | 2.34 | 0.130 | 0.3 | 0.5 |
| Ex. 11 | | PET | C | 2.34 | 0.100 | 2.34 | 0.130 | 0.2 | 0.2 |

The results shown in Table 1 show that according to the masking sheets of Examples 1 to 3, 5, 7, 8, 10 and 11 with Et'·Hs$^3$ > 0.7, solution penetration was significantly inhibited during the anodizing process as compared to the masking sheets of Examples 4, 6 and 9. Especially great results were obtained with the masking sheets according to Examples 1, 2, 8, 10 and 11. Among them, with respect to the masking sheet of Example 11 comprising a PSA layer formed from the PSA composition C, the solution penetration distance did not change much between the smooth plate and the milled plate, exhibiting excellent adaptability to an adherend having an uneven surface. On the other hand, with respect to the masking sheets of Examples 4, 6 and 9, in the solution penetration proof test using the milled plate as the adherend, the chemical solution penetrated along the mill marks, resulting in clearly longer solution penetration distances as compared to when the smooth plate was used.
It is noted that in each of the masking sheets of Examples 1 to 11, the areas where solution penetration occurred were clearly observable when inspected from the outer face side of the masking sheet. When the masking sheets of Examples 1 to 6 were subjected to chemical solution treatment using a smooth duralumin plate under the same conditions as the anodizing process but without the applied electric current, no solution penetration was observed in any of the masking sheets.
In the solution penetration proof test using the smooth duralumin plate as the adherend, the anodized sample according to each Example was gently washed with water and allowed to naturally dry at room temperature. Subsequently, with respect to two samples among the five samples, the test pieces were manually peeled from the duralumin plates by a test operator. The peeling was carried out at a tensile speed of about 0.3 m/min in the 90° direction relative to the surface of the duralumin plate. After the test pieces were peeled, the surfaces of the duralumin plates were visually inspected for the presence of leftover adhesive residue. As a result, leftover adhesive residue was not observed in any of Examples 1 to 11.

With respect to the remaining three samples among the five samples, a solvent-based paint EPORA#3000S (available from Nihon Tokushu Toryo Co., Ltd.) was sprayed over the entire surfaces of the duralumin plates on the sides on which the test pieces were adhered. The paint was sprayed in an amount to form a coating layer of about 10 μm thickness after dried. The sprayed paint was allowed to dry at about 100 °C. When the paint was sufficiently dried and cured, the test pieces were manually peeled from the duralumin plates by a test operator. The peeling was carried out at a tensile speed of about 0.3 m/min in the 90° direction relative to the surface of the duralumin plate. After the test pieces were peeled, the surfaces of the duralumin plates were visually inspected and none of them was found with leftover adhesive residue.

With respect to the masking sheet of Example 10, the 90° peel strength (to-duralumin 90° peel strength) was 6.5 N/20mm when determined by the method described earlier, using a smooth duralumin A2024 plate as the adherend. With respect to each of the masking sheets of Examples 1 to 9 and 11, the to-duralumin 90° peel strength was 1.0 N/20mm or greater (more specifically, 3.0 N/20mm or greater, but 25 N/20mm or less) when determined in the same manner. With respect to each of the masking sheets of Examples 1 to 11, no leftover adhesive residue was observed on the duralumin plate, either.

[Reference Signs List]

1: substrate
1A: first face
1B: second face
2: PSAlayer
2a: PSAlayer of first PSA piece
2b: PSAlayer of second PSA piece
2A: surface (adhesive face)
3: release liner
3A: surface
3B: back face
10: masking sheet
10a: first PSA piece
10b: second PSA piece
10B: outer face
100: PSA sheet with release liner (PSA product)

## Claims

1.  A masking sheet for anodizing, the masking sheet comprising

    a substrate having first and second faces, and
    a pressure-sensitive adhesive layer placed on the first face side of the substrate,

    wherein

    the substrate is a non-metal substrate, and
    the masking sheet has an elastic modulus Et' and the substrate has a thickness Hs, satisfying the next relation $0.7 \ \mathrm{N \cdot mm} < \mathrm{Et' \cdot Hs^3}$,

      wherein the elastic modulus Et' is determined using a dynamic viscoelastometer (RSA-III available from TA Instruments) in a tension mode, at a chuck distance of 23 mm, a heating rate of 10 °C/min, a frequency of 1 Hz and a strain of 0.05 %,
      wherein the elastic modulus Et' of the masking sheet is 1.0 GPa or greater,
      wherein the pressure-sensitive adhesive layer is formed of a rubber-based pressure-sensitive adhesive,
      wherein the substrate has a thickness Hs of 0.05 mm or more and 0.30 mm or less.

**2.** The masking sheet according to Claim 1 wherein the pressure-sensitive adhesive forming the pressure-sensitive adhesive layer comprises a tackifier, the tackifier accounting for 10 % to 85 % by weight of the pressure-sensitive adhesive layer.

**3.** The masking sheet according to any one of Claims 1 and 2 wherein the rubber-based pressure-sensitive adhesive comprises a rubber-based polymer formed of at least 95 % natural rubber by weight.

**4.** The masking sheet according to any one of Claims 1 to 3 wherein the rubber-based pressure-sensitive adhesive comprises 20 parts to 40 parts by weight of a terpene-based resin to 100 parts by weight of the rubber-based polymer in the pressure-sensitive adhesive.

**5.** The masking sheet according to any one of Claims 1 to 4 wherein the pressure-sensitive adhesive layer is formed of a pressure-sensitive adhesive crosslinked by a reaction of a hydroxy group-containing polymer and a hydroxy-reactive crosslinking agent.

**Patentansprüche**

**1.** Abdeckfolie zum Anodisieren, wobei die Abdeckfolie umfasst

ein Substrat mit einer ersten und einer zweiten Seite, und
eine druckempfindliche Klebstoffschicht, die auf der ersten Seite des Substrats angeordnet ist, wobei
das Substrat ein Nicht-Metallsubstrat ist, und
die Abdeckfolie einen Elastizitätsmodul Et' hat und das Substrat eine Dicke Hs hat, die die folgende Beziehung erfüllt: 0,7 N*mm < Et'·Hs$^3$,
wobei der Elastizitätsmodul Et' unter Verwendung eines dynamischen Viskoelastometers (RSA-III, erhältlich von TA Instruments) in einem Zugmodus, bei einem Spannfutterabstand von 23 mm, einer Heizrate von 10 °C/min, einer Frequenz von 1 Hz und einer Dehnung von 0,05 % bestimmt wird,
wobei der Elastizitätsmodul Et' der Abdeckfolie 1,0 GPa oder mehr beträgt,
wobei die druckempfindliche Klebstoffschicht aus einem druckempfindlichen Klebstoff auf Kautschukbasis gebildet ist,
wobei das Substrat eine Dicke Hs von 0,05 mm oder mehr und 0,30 mm oder weniger aufweist.

**2.** Abdeckfolie nach Anspruch 1, wobei der druckempfindliche Klebstoff, der die druckempfindliche Klebstoffschicht bildet, einen Klebrigmacher umfasst, wobei der Klebrigmacher 10 bis 85 Gew.-% der druckempfindlichen Klebstoffschicht ausmacht.

**3.** Abdeckfolie nach einem der Ansprüche 1 und 2, wobei der druckempfindliche Klebstoff auf Kautschukbasis ein Polymer auf Kautschukbasis umfasst, das zu mindestens 95 Gew.-% aus Naturkautschuk besteht.

**4.** Abdeckfolie nach einem der Ansprüche 1 bis 3, wobei der druckempfindliche Klebstoff auf Kautschukbasis 20 bis 40 Gewichtsteile eines Harzes auf Terpenbasis auf 100 Gewichtsteile des Polymers auf Kautschukbasis in dem druckempfindlichen Klebstoff umfasst.

**5.** Abdeckfolie nach einem der Ansprüche 1 bis 4, wobei die druckempfindliche Klebstoffschicht aus einem druckempfindlichen Klebstoff gebildet ist, der durch eine Reaktion eines hydroxygruppenhaltigen Polymers und eines hydroxyreaktiven Vernetzungsmittels vernetzt ist.

**Revendications**

**1.** Feuille de masquage pour anodisation, la feuille de masquage comprenant

un substrat ayant des première et seconde faces, et
une couche d'adhésif sensible à la pression placée sur le côté de la première face du substrat,
dans laquelle
le substrat est un substrat non métallique, et
la feuille de masquage a un module élastique Et' et le substrat a une épaisseur Hs, satisfaisant la relation suivante 0,7 N·mm < Et'·Hs$^3$,

dans laquelle le module élastique Et' est déterminé au moyen d'un viscoé-lastomètre dynamique (RSA-III disponible auprès de TA Instruments) en mode traction, avec une distance de mandrin de 23 mm, une vitesse de chauffage de 10 °C/min, une fréquence de 1 Hz et une contrainte de 0,05 %,

dans laquelle le module élastique Et' de la feuille de masquage est supérieur ou égal à 1,0 GPa,

dans laquelle la couche d'adhésif sensible à la pression est formée d'un adhésif sensible à la pression à base de caoutchouc,

dans laquelle le substrat a une épaisseur Hs de 0,05 mm ou plus et 0,30 mm ou moins.

2. Feuille de masquage selon la revendication 1, dans laquelle l'adhésif sensible à la pression formant la couche d'adhésif sensible à la pression comprend un agent poisseux, l'agent poisseux représentant de 10 % à 85 % en poids de la couche d'adhésif sensible à la pression.

3. Feuille de masquage selon l'une quelconque des revendications 1 et 2, dans laquelle l'adhésif sensible à la pression à base de caoutchouc comprend un polymère à base de caoutchouc formé d'au moins 95 % de caoutchouc naturel en poids.

4. Feuille de masquage selon l'une quelconque des revendications 1 à 3, dans laquelle l'adhésif sensible à la pression à base de caoutchouc comprend de 20 parties à 40 parties en poids d'une résine à base de terpène pour 100 parties en poids du polymère à base de caoutchouc dans l'adhésif sensible à la pression.

5. Feuille de masquage selon l'une quelconque des revendications 1 à 4, dans laquelle la couche d'adhésif sensible à la pression est formée d'un adhésif sensible à la pression réticulé par une réaction entre un polymère contenant des groupes hydroxy et un agent de réticulation réactif aux hydroxy.

[Fig. 1]

FIG.1

[Fig. 2]

FIG.2

[Fig. 3]

FIG.3

[Fig. 4]

FIG.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0234680 A
- US 2010252192 A1
- EP 2722376 A1
- US 2008029399 A1
- JP 2014139299 A

**Non-patent literature cited in the description**

- **C. A. DAHLQUIST.** Adhesion : Fundamental and Practice. McLaren & Sons, 1966, 143